(19) Europäisches Patentamt
European Patent Office
Office européen des brevets

(11) Publication number : **0 328 678 B1**

(12) # EUROPEAN PATENT SPECIFICATION

(45) Date of publication of patent specification : **13.12.95 Bulletin 95/50**

(51) Int. Cl.$^6$ : **G05B 11/32**

(21) Application number : **88906900.1**

(22) Date of filing : **11.08.88**

(86) International application number : **PCT/JP88/00798**

(87) International publication number : **WO 89/01654 23.02.89 Gazette 89/05**

(54) **NON-INTERFERED CONTROL METHOD AND APPARATUS**

(30) Priority : **12.08.87 JP 199770/87**
**28.08.87 JP 212813/87**

(43) Date of publication of application : **23.08.89 Bulletin 89/34**

(45) Publication of the grant of the patent : **13.12.95 Bulletin 95/50**

(84) Designated Contracting States : **DE GB**

(56) References cited :
**DE-B- 1 300 715**
**JP-A- 5 977 504**
**JP-A-53 126 482**
**JP-B- 0 511 665**
**JP-U-56 145 703**
**PROC. OF THE 1986 IEEE INTERNATIONAL CONF. ON SYSTEMS, MAN AND CYBERNETICS October 1986, ATLANTA USA, pages 1260-1265; P.P. GROUMPOS et al.: "THE BLOCK-ARROW-STRUCTURE (BAS) CONTROL APPROACH TO LARGE SCALE SYSTEMS"**

(73) Proprietor : **HITACHI, LTD.**
**6, Kanda Surugadai 4-chome**
**Chiyoda-ku, Tokyo 100 (JP)**

(72) Inventor : **KATAYAMA, Yasunori**
**1-449-60, Miwa**
**Mito-shi Ibaraki 310 (JP)**
Inventor : **MOROOKA, Yasuo**
**2-2-9, Hanayamacho**
**Hitachi-shi Ibaraki 317 (JP)**
Inventor : **TAKANO, Taiko**
**4-10-1, Hidakacho**
**Hitachi-shi Ibaraki 319-14 (JP)**
Inventor : **MARUYAMA, Harumi**
**18-11, Aobacho**
**Katsuta-shi Ibaraki 312 (JP)**
Inventor : **SHIMIZU, Itsuo**
**3705, Higashi-ishikawa**
**Katsuta-shi Ibaraki 312 (JP)**
Inventor : **HATTORI, Satoshi**
**1-33-2, Nishinarusawacho**
**Hitachi-shi Ibaraki 316 (JP)**
Inventor : **SAITO, Yutaka**
**1-36-3-203, Nishinarusawacho**
**Hitachi-shi Ibaraki 316 (JP)**

(74) Representative : **Calderbank, Thomas Roger et al**
**MEWBURN ELLIS**
**York House**
**23 Kingsway**
**London WC2B 6HP (GB)**

EP 0 328 678 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a non-interference control device for controlling an object, such as a plant rolling mill, etc.

In a system in which a plurality of variables (called control quantities) are taken into account when controlling an object, the regulation of quantities used to operate the object to be controlled (called operation quantities) which are regulated in various ways in order to determine a control quantity, may influence other control quantities. This phenomenon is usually called interference of control quantities and reduces the precision and the stability of the control.

For example, in a control system for a rolling mill, suppose that control quantities are the plate outlet thickness of the rolled material and the forward tension and operation quantities are a roll position reference or instruction and a rolling speed instruction of the rolling mill. Then, when an operation is carried out according to the roll position instruction and the rolling speed instruction in order to control the plate outlet thickness at a predetermined value, the forward tension, which is the other control quantity, may be interfered to be varied.

Heretofore, in order to prevent such an interference, a method is proposed (JP-A-59-17920, JP-A-59-202108), by which mutual interference between different control quantities is previously compensated by varying inputs in a multiple variable control system having 3 inputs (operation quantities) and 3 outputs (control quantities) (control system for a rolling mill). In these prior art techniques, mutual interference between control quantities is eliminated so as to achieve the relation of 1-input-1-output.

Apart therefrom, JP-A-58-207103, JP-A-59-226903, JP-A-61-131103 and JP-A-62-144811 can be cited as prior art techniques relating to this invention.

According to the prior art examples described above, mutual interference is eliminated for all the control quantities. According to such methods, in the case where the scale of the object to be controlled is enlarged, i.e. in the case where the number of control quantities increases, the amount of operations necessary for eliminating the interference becomes enormous. For example, if the number of lines or rows is multiplied by $\underline{n}$ in a matrix operation carried out in the process for eliminating the interference, the number of calculations required for each of matrix operation is multiplied by $n^2$. This gives rise to disadvantages that the device necessary for the control is enlarged, that delay in the control time takes place, which makes it impossible to effect control in real time, etc.

Further, since particular characteristics of the object to be controlled were not taken into account and the elimination of the interference was effected equally for all the control quantities, there was a problem that it is difficult to effect the control without uselessness and with a high efficiency.

Further the prior art examples described above had another problem that they consist exclusively in decomposing an n-input-n-output system into 1-input-1-output systems and therefore they are incompetent for an n-input-m-output ($n \neq m$) system.

Furthermore, in the prior art examples, there is disposed, apart from a driving system control device, another device, called compensation operating device having a function different from that of the driving system control device in order to eliminate mutual interference among the plate thickness control, the shape control and the tension control of the rolled material. It was found that, in the case where it is tried to control a same object to be controlled by means of a plurality of control means having different functions in this way, undesirable interference reaction takes place mutually among these control means, which gives rise to an inconvenience that the desired object may not be achieved satisfactorily.

That is, taking a case as an example, where a plurality of control means having different functions are non-interference control means and operation quantity control means as in the prior art example, state quantities are varied by performing certain operations on the state quantities of the object to be controlled by means of the non-interference control means in order to eliminate interference among control quantities. After that, when operation quantities are calculated by means of the operation quantity control means (e.g. optimum control means) on the basis of the state quantities thus varied, the state, which has been varied for eliminating the interference, is regarded as control deviations, and the operation quantity control means are operated so as to annul these deviations. In other wards, the control is effected so as to reduce the deviations without distinguishing state quantities, which have been varied by external perturbations, from those varied by the non-interference control. Here the control deviation means the difference between the finally aimed value of the control and the value in the real control.

As the result, the desired control object is not achieved because of the facts that working points of the operation quantity control means vary, that unexpected control is effected, etc.

As has previously been mentioned, it is known to eliminate mutual interference of control quantities within a control device. Thus, JP-B2-51-1665 (corresponding to the pre-characterising part of claim 1) and JP-A-59-202108 (referred to previously) disclose the control of a rolling stand of a rolling mill to achieve this. However, they consider only a single rolling stand.

The present invention seeks to deal with the problem that the control of one rolling stand may affect the control of another rolling stand.

Therefore, the present invention provides a control device arranged to control an object which receives a plurality of operation quantities and produces a plurality of state quantities based on the received operation quantities wherein a relationship between a vector of said plurality of state quantities and a vector of said plurality of operation quantities is defined by a control matrix and a system matrix wherein said object is divided into a plurality of control blocks, each block receiving at least one of said plurality of operation quantities and producing at least one of said plurality of state quantities;

each of said control matrix and said system matrix is divided into diagonal component matrices and Non-diagonal component matrices each of said component matrices being determined based on the relationship between said at least one operation quantity and said at least one state quantity received by/produced at each of said control blocks; and

non-interference control means is provided which includes feed-forward compensation means for cancelling each of said non-diagonal component matrices of said control matrix and feed back compensation means for cancelling each of said non-diagonal component matrices of said system matrix.

In this way, a non-interference control device may be provided which is capable of removing the disadvantages of the prior art described above and reducing or eliminating interference among control quantities without increasing the size of the control device nor delaying the control time even for a large scale object to be controlled having a number of control quantities.

The present invention also permits a non-interference control device to be provided which is capable of effecting efficient non-interference control even for an object to be controlled, for which the number of inputs (operation quantities) differs from the number of outputs (control quantities).

With this invention, since interference is not eliminated uniformly for every control quantity, but it is eliminated between different blocks, even if the number of control quantities is increased, the amount of operations for eliminating the interference is not remarkably increased by choosing appropriately the number of blocks. Further, according to a preferable mode of realization of this invention, since interference is not eliminated uniformly for every control quantity, but control quantities, which are closely related to each other, are considered all together (in a block), it is not necessary to eliminate interference with a special effort within each of the blocks. That is, uselessness and inefficiency that the amount of control operations is increased by eliminating the interference, that the device is complicated, that great control signals (consequently great mechanical movements at extremities for the operation) are required, etc. can be suppressed. Since by the method according to this invention the elimination of the interference is not effected in the form of 1-input-1-output, but it is effected between different blocks, this invention can be applied in general to any object to be controlled, for which the number of inputs (number of operation quantities) differs from the number of outputs (number of control quantities).

Furthermore, by a device according to this invention, since it comprises control means, by which control operations are performed in a unit of a block, for which interference is eliminated, even if the scale of the object to be controlled is enlarged, it is possible to divide finely control means and also to perform parallel operations among these control means. For this reason a high speed control and a real time control are made possible.

Still further, according to a mode of realisation, since the model of the object to be controlled creates variations of the state quantities of the object to be controlled, changed by each of the control means, no interference is produced between different control means, because it is possible to control appropriately also state quantities generated by various sorts of factors (external perturbations, etc.) besides the relevant control means by subtracting variations of the state quantities generated by means of the model stated above from the state quantities of the object to be controlled.

Embodiments of the present invention will now be described in detail, by way of example, with reference to the accompanying drawings, in which:

Fig. 1 is a diagram illustrating a control system for a tandem rolling mill, which is an embodiment of this invention;

Fig. 2 is a diagram indicating variables at the i-th and (i+1)-th stands of the tandem rolling mill;

Fig. 3 is a diagram showing a calculation formula in the form of a matrix used in the embodiment of this invention;

Fig. 4 is a diagram illustrating the construction of a control system for the elimination of interference between different blocks in the embodiment of this invention.

Fig. 5 is a diagram indicating state equations in the form of matrices of an object to be controlled in the embodiment of this invention;

Fig. 6 is a diagram indicating the internal structure of the optimum control system in the embodiment of this invention;

Fig. 7A shows graphs representing simulation results obtained by the prior art control method for a rolling mill;

Fig. 7B shows graphs representing simulation results obtained by the embodiment of this invention;

Fig. 8 is a diagram illustrating a control system for a tandem rolling mill, which is another embodiment of this invention;

Fig. 9 is a diagram illustrating a non-interference control system in the other embodiment of this invention;

Fig. 10 is a diagram illustrating the internal structure of the optimum control means in the other embodiment of this invention;

Fig. 11 is a diagram illustrating the internal structure of the model of the object to be controlled in the other embodiment of this invention;

Fig. 12 is a diagram illustrating the construction of the control system for eliminating interference between different control systems in the other embodiment of this invention;

Fig. 13 is a diagram illustrating the general construction of this invention for achieving the elimination of interference between different blocks, for which the object to be controlled is divided into a plurality of blocks;

Fig. 14 and 15 show operations performed in the control in Fig. 13 in the form of matrices;

Fig. 16 is a diagram showing relations among the object to be controlled, the non-interference control system and the optimum control system of this invention for achieving the elimination of interference between different blocks, for which the object to be controlled is divided into a plurality of blocks;

Fig. 17 is a diagram illustrating the construction of a control system for realizing the relation represented by Eq. (22) in the specification;

Fig. 18 is a diagram illustrating the internal structure of the optimum control system for the i-th block, in the case where the object to be controlled is divided into a plurality of blocks;

Fig. 19 is a diagram showing an example of the general construction of this invention for suppressing interference among a plurality of control systems having different functions;

Fig. 20A and 20B are diagrams for explaining the principle of this invention for suppressing interference among a plurality of control systems having different functions;

Fig. 21 is a diagram illustrating the construction of a control system, in the case where 2 control means having different functions are applied to an object to be controlled;

Fig. 22 is a diagram showing another example of the general construction of this invention for suppressing interference among a plurality of control systems having different functions; and

Fig. 23 is a diagram showing still another example of the general construction of this invention for suppressing interference among a plurality of control systems having different functions.

Fig. 1 shows a case where this invention is applied to the control of a tandem rolling mill. In the figure each of rolling stands is represented by a pair of rolls 101a, 101b, 101c and rolled material 104 is moved in the direction indicated by an arrow in the figure, while being rolled by them. State variables (control quantities X) 105, 106, 107 of the rolling pairs are inputted in a non-interference control system 3, optimum control systems 111,112,113 and useless time components 114, 115 through converters 108, 109, 110 effecting processings such as unification of units, etc. The useless time components take the time necessary for the rolled material to move from a certain stand to the succeeding one into account and reflect this time on the control. The outputs thereof are inputted in the optimum control systems 112, 113. The outputs (R) of the optimum control systems 111, 112, 113 are inputted in the non-interference control system 3 stated above. The output (operation quantity U) of the non-interference control system 3 is inputted in actuators 116, 117, 118. Each of these actuators includes a roll speed control system, a roll position control system, etc. and the control is effected by means thereof with a desired precision so that the rolled material 104 has a desired plate thickness.

In this embodiment the control system of such a tandem rolling mill is divided into a plurality of blocks and a non-interference control is effected between different blocks. Therefor, at first, a linear model of the rolling mill, which is the object to be controlled, is obtained. As indicated in Fig. 2, the i-th and (i+1)-th stands counted from the inlet side of the tandem rolling mill are considered here.

In order to obtain the linear model, the plate outlet thickness deviation, the roll gap, the rolling load deviations, the forward slip deviation, the tension deviation, the rolling speed deviation, mass flow, and the rolling speed (plate speed) are represented by numerical values as follows;

The plate outlet thickness deviation $\Delta h_i$ can be represented by the following Eq. (1), using the gauge meter equation.

$$\Delta h_i = \Delta S_i + \frac{\Delta P_i}{K_i} \quad (1)$$

where

$\Delta h_i$ : plate outlet thickness deviation

$\Delta S_i$ : roll gap deviation

$\Delta P_i$ : rolling load deviation

$K_i$ : elastic modulus deviation

i : i-th stand

The roll gap is represented by an output of the roll position control device. For the sake of simplicity, supposing that the control quantity of roll position be a 1-st order lagging system, the following Eq. (2) is valid:

$$\frac{d\Delta S_i}{dt} = \frac{-K_{si}}{T_{si}}\{\Delta S_i - \Delta S_{Pi}\} \quad (2)$$

where

$\Delta S_{pi}$ : roll gap deviation

$T_{si}$ : time constant of the roll position control device

$K_{si}$ : gain of the roll position control device

The rolling load deviation can be expressed by the following Eq. (3) by Taylor-developing the Hill's approximation formula of the rolling load and obtaining only terms of 1st order differentiation to linearize it;

$$\Delta P_i = \frac{\partial P_i}{\partial H_i}\Delta H_i + \frac{\partial P_i}{\partial h_i}\Delta h_i + \frac{\partial P_i}{\partial T_{fi}}\Delta T_{fi} + \frac{\partial P_i}{\partial T_{bi}}\Delta T_{bi}$$

$$= \frac{\partial P_i}{\partial H_i}\Delta H_i + \frac{\partial P_i}{\partial h_i}\Delta h_i + \frac{\partial P_i}{\partial T_{fi}}\Delta T_i + \frac{\partial P_i}{\partial T_{bi}}\Delta T_{bi} \quad (3)$$

$P_i$: rolling load formula,

$H_i$: plate inlet thickness,

$\Delta H_i$: plate inlet thickness deviation,

$h_i$: plate outlet thickness

$T_{fi}(=T_i)$: forward tension

$\Delta T_{fi}(=A_{Ti})$: orward tension deviation,

$T_{bi}(=T_{i-1})$: back tension,

$\Delta T_{bi}$: back tension deviation.

The forward slip deviation $\Delta f_i$ can be obtained from a forward slip formula f ($H_i$, $h_i$, $T_{fi}$, $T_{bi}$) and the following Eq. (4) is valid:

$$\Delta f_i = \frac{\partial f_i}{\partial H_i}\Delta H_i + \frac{\partial f_i}{\partial h_i}\Delta h_i + \frac{\partial f_i}{\partial T_{fi}}\Delta T_{fi} + \frac{\partial f_i}{\partial T_{bi}}\Delta T_{i-1} \quad (4)$$

From the tension formula the following Eq. (5) is obtained;

$$\frac{d\Delta T_i}{dt} = \frac{-Ebh_i}{L}(\Delta V_{ei+1} - \Delta V_{0i}) \quad (5)$$

where

E: Young's modulus of the rolled material,

b: plate width of the rolled material,

L: distance between the i-th and (i+1)-th stands,

$\Delta V_{ei}$+1: plate speed at the inlet side of the (i+1)-th stand,

$V_{0i}$: plate speed at the outlet side of the i-th stand.

When it is supposed that the speed control is a first order lag system, its differential equation is represented by the following Eq. (6);

$$\frac{d\Delta V_{Ri}}{dt} = \frac{-K_{Vi}}{T_{Vi}}(\Delta V_{Ri} - \Delta V_{Pi}) \quad (6)$$

where

$\Delta V_{Ri}$ : deviation in the roll speed,

$T_{Vi}$ : time constant,

$K_{Vi}$ : gain, and

$\Delta V_{pi}$ : instruction deviations in the roll speed.

From the mass flow formula the following Eq. (7) is obtained;

$$\Delta V_{ei+1} = \frac{1}{H_{i+1}}(h_{i+1}\Delta V_{0i} + V_{0i+1}\Delta h_{i+1} - V_{ei+1}\Delta H_{i+1}) \quad (7)$$

The following Eq. (8) is obtained by Taylor-developing the plate speed formula and taking only the terms of first order differential;

$$\Delta V_{0i} = V_{Ri}\Delta f_i + (1 + f_i)\Delta V_{Ri} \quad (8)$$

Here, if the i-th stand is regarded as an independent control system, denoting a vector (state vector), whose elements are state variables representing the internal state thereof, by $X_i$ and a vector (operation vector), whose elements are the inputs, by $u_i$, $x_i$ and $u_i$ can be expressed as follows, respectively;

$$x_i = [\Delta h_i, \Delta V_{Ri}, \Delta T_i]^T$$

$$u_i = [\Delta S_{Pi}, \Delta V_{Pi}]^T$$

Using these expressions, it is tried to rearrange Eqs. (1) to (8) to express them in the form of differential equations.

At first, starting from Eqs. (1) to (3), the following Eq. (9) is obtained;

$$\frac{d\Delta h_i}{dt} = \frac{d\Delta S_i}{dt} = \frac{-K_{Si}}{T_{Si}} \left\{ \Delta h_i - \frac{\Delta P_i}{K_i} - \Delta S_{Pi} \right\}$$

$$= \frac{-K_{Si}}{T_{Si}} \left\{ \left( 1 - \frac{\partial P_i}{\partial h_i} \right) \Delta h_i - \frac{\partial P_i}{\partial T_{fi}} \Delta T_i - \frac{\partial P_i}{\partial T_{bi}} \Delta T_{i-1} - \Delta S_{Pi} - \frac{\partial P_i}{\partial H_i} \Delta H_l \right\}$$

$$= \left[ -\frac{K_{Si}}{T_{Si}} \left( 1 - \frac{\partial P_i}{\partial h_i} \right),\ 0,\ \frac{K_{Si}}{T_{Si}} \frac{\partial P_i}{\partial T_{fi}} x_i \right]$$

$$+ \left[ 0,\ 0, \frac{K_{Si}}{T_{Si}} \frac{\partial P_i}{\partial T_{fi}} \right] x_{i-1} + \left[ \frac{K_{Si}}{T_{Si}},\ 0\ \Delta u_i \right]$$

$$+ \frac{\partial P_i}{\partial H_i} \Delta H_i \qquad \cdots\cdots\cdots\cdots \quad (9)$$

Then, transforming Eq. (6), the following Eq. (10) is obtained;

$$\frac{d\Delta V_{Ri}}{dt} = \left[ 0, \frac{-K_{Vi}}{T_{Vi}},\ 0 \right] x_i + \left[ 0, \frac{K_{Vi}}{T_{Vi}} \right] u_i \qquad \cdots \quad (10)$$

Starting from Eqs. (4), (5), (7) and (8), the following Eq. (11) is obtained;

$$\frac{d\Delta T_i}{dt} = \frac{Ebh_i}{L}\left[\frac{1}{H_{i+1}}(h_{i+1}\Delta V_{0i+1} + V_{0i+1}\Delta h_i - V_{ei}\Delta H_{i+1} - V_{ei}\Delta H_{i+1}) - \Delta V_{0i}\right]$$

$$= \left[\frac{Ebh_i}{LH_{i+1}}\left(h_{i+1} V_{Ri+1}\frac{\partial f_{i+1}}{\partial h_{i+1}} + V_{0i+1}\right), \frac{Ebh_i h_{i+1}}{LH_{i+1}}(1+f_{i+1}), \frac{Ebh_i h_{i+1}}{LH_{i+1}} V_{Ri+1}\frac{\partial f_{i+1}}{\partial T_{fi+1}}\right] x_{i+1}$$

$$+ \left[-\frac{Ebh_i}{L} V_{Ri}\frac{\partial f_i}{\partial h_i}, \frac{-Ebh_i}{L}(1+f_i), \frac{Ebh_i}{L}\left(\frac{h_{i+1}}{H_{i+1}} V_{Ri+1}\frac{\partial f_{i+1}}{\partial T_{bi+1}} - V_R\frac{\partial f_i}{\partial T_{bi}}\right)\right] x_i$$

$$+ \left[O, O, -\frac{Ebh_i}{L} V_{Ri}\frac{\partial f_i}{\partial T_{bi}}\right] x_{i-1}$$

$$+ \frac{Ebh_i}{L}\left(V_{Ri+1}\frac{\partial f_{i+1}}{\partial H_{i+1}} - \frac{V_{ei+1}}{\partial H_{i+1}}\right)\Delta H_{i+1}$$

$$- \frac{Ebh_i}{L} V_{Ri}\frac{\partial f_i}{\partial H_i}\Delta H_i \qquad \cdots\cdots\cdots \quad (11)$$

Eqs. (9) to (11) express explicitly in the form of differential equations the relationships among the plate outlet thickness deviation $\Delta h_i$, the roll speed deviation $\Delta V_{Ri}$ and the forward tension deviation $\Delta T_i$, which are operation quantities, as well as the roll gap deviation $\Delta S_{Pi}$ and the roll speed deviation $\Delta V_{Pi}$, which are control quantities, in this embodiment.

Taking a three-stand tandem mill as an example, these relationships are described in the form of a matrix, as indicated in Fig. 3. In the figure, the terms of the two members in (A) and (B) correspond to each other. $a_{ij}$, $b_{ij}$ and $d_{ij}$ in Fig. 3(A) are coefficients for the variables in Eq. (9) to (11). For example, in Eq. (10), $\frac{-K_{Vi}}{T_{Vi}}$ in the first term of the right member is $\frac{K_{V2}}{T_{V2}}$, if i=2, which corresponds to $a_{55}$ in Fig. 3(A). In the same way, $b_{44}$ = $\frac{K_{V2}}{T_{V2}}$. The third term in the right member can be understood as measurable external perturbation.

According to the idea of this invention, the state equation indicated in the figure is divided into a plurality of blocks, each of which includes at least one operation quantity, so that the blocks have mutually no interference. This is because, in the case of this embodiment, it is desirable that a concrete dividing method is defined for every stand. Contrarily to the fact that two different stands are related mutually to each other only by the rolled material connecting them, i.e. the rolling tension, within one stand, not only the tension but also the plate thickness and the rolling speed are related mutually, and thus the operation quantities are related more closely than between different stands. According to Fig. 3, it can be seen that the tension is only one state quantity relating the two different stands. For example, the terms having influences from the second stand to the first stand are $a_{34}$, $a_{35}$ and $a_{36}$, all of which are related to the tension deviations $\Delta T_1$ and $\Delta T_2$. On the other hand, considering the interior of the first stand, it is found that these exist terms of $a_{11}$, $a_{13}$, $a_{22}$ $a_{31}$, $a_{32}$, and $a_{33}$, which are related to each other over all of $\Delta h_1$, $\Delta V_{R1}$, and $\Delta T_1$.

Now a concrete method for eliminating the interference between different stands represented by the first term of the right member (system matrix A) in Fig. 3 will be explained, taking the second stand as an example.

When the state equations related to the second stands are extracted among those indicated in Fig. 3, the following Eqs. (12) to (14) are obtained;

$$\frac{d\Delta h_2}{dt} = \underline{\underline{a_{43}\Delta T_l}} + a_{44}\Delta h_2 + a_{45}\Delta V_{R2} + a_{43}\Delta T_2 + a_{33}\Delta S_{P2} + d_{43}\Delta H_2 \quad (12)$$

$$\frac{d\Delta V_{R2}}{dt} = a_{55}\Delta V_{R2} + b_{44}\Delta V_{P2} \quad (13)$$

$$\frac{d\Delta T_2}{dt} = \underline{\underline{a_{63}\Delta T_1}} + a_{64}\Delta h_2 + a_{65}\Delta V_{R2} + a_{63}\Delta T_2 + \underline{\underline{a_{67}\Delta h_3}} + \underline{\underline{a_{68}V_{R3}}} + \underline{\underline{a_{69}T_3}} + \underline{\underline{d_{54}\Delta H_3}} + \underline{\underline{d_{53}\Delta H_2}} \quad (14)$$

The terms, in which the suffix of the variables is 1 or 3, i.e. terms indicated by underlines in Eqs. (12) to (14) are terms representing interference from other stands and the elimination of the interference can be achieved by annulling these terms.

Fig. 4 indicates such a control system for eliminating the interference. Each of the interference terms will be explained below.

The tension deviation $\Delta T_1$ 201 of the first stand is inputted in an adder 203 through a block $a_{43}$ 202, as indicated by the first term of the right member in Eq. (12). Here e.g. "block $a_{43}$" means "an amplifier having a gain represented by $a_{43}$". The outlet of the adder is $\Delta h_2$, which is integrated by an integrator 204 to form the plate thickness deviation $\Delta h_2$ 205. As a gain summing the feed back and the feed forward for eliminating the interference, $\Delta T_1$ 201 is inputted in a control matrix 207 as the input through a non-interference gain $f_{21}$ 206. The output of this control matrix 207 is applied to the adder 203 and the elimination of the interference is valid, if the output of this adder 203 includes no component of $\Delta T_1$. That is, starting from the condition:

$$b_{33} \times f_{21} \times T\Delta_1 + a_{43} \times T\Delta_1 = 0,$$

it can be understood that it is sufficient to choose a gain represented by;

$$f_{21} = -\frac{a_{43}}{b_{33}}.$$

Now the method for annulling the interference terms indicated by underlines in Eq. (14) will be explained below.

The tension deviation $\Delta T_1$ of the first stand is inputted in an adder 210 through a block $a_{63}$ 208 and an adder 209. The plate thickness deviation $\Delta h_3$ of the third stand is inputted in an adder 212 through a block $a_{76}$ 211; the deviations in the speed $\Delta V_{R3}$ in the adder 212 through a block $a_{86}$ 213; the deviations in the tension $\Delta T_3$ in the adder 212 through a block $a_{96}$ 214; and the outputs of the adders 210 and 212 are inputted in an adder 213.

On the other hand, in this embodiment, blocks $f_{25}$ 214, $f_{22}$ 215, $f_{23}$ 216, $f_{24}$ 217 and $f_{26}$ 218 are used in order to eliminate the interference. $\Delta T_1$ is inputted in an adder 219 through the block $f_{25}$ 214, whose gain is $a_{63}$; $\Delta h_3$ in an adder 219 through the block $f_{22}$ 215, whose gain is $a_{76}$; $\Delta V_{R3}$ in an adder 219 through the block 216, whose gain is $a_{86}$; $T\Delta_3$ in an adder 219 through the block $f_{24}$ 217, whose gain is $a_{96}$; and the output of the adder 219 in a block 222 through a block 218 as the instruction deviations in the speed. The output of the block 220 is inputted in the adder 213 through an integrator 221, a block 222 and the adder 210.

If the gain of the block $f_{26}$ is the inverse of the transmission function up to the integrator 220, the blocks 221, 222 and the adder 210, 213, i.e.

$$f_{26} = \frac{S - a_{55}}{b_{44} \cdot a_{65}}$$

S : Laplacian operator,

The equivalent gain from the adder 219 to the adder 213 is -1. Consequently the influences of $\Delta T_1$, $\Delta h_3$, $\Delta V_{R3}$, and $\Delta T_3$ are compensated by each other and thus the elimination of the interference is valid with respect to the second stand.

By a method similar to that described above it is possible to eliminate interference for each of the other stands and thus the elimination of interference between different blocks is made valid by the operation thereof.

Further, for the blocks, in which the number of inputs is equal to the number of outputs, if the elimination of interference is effected by regarding each of them as a block of 1-input-1-output, it is possible to realize the elimination of interference between the input and the output of each of them in addition to the elimination of interference between different blocks.

The state equation of the object to be controlled (including a non-interference control system), for which such a structure is adopted, will be explained below, referring to Fig. 5. It is expressed as an object to be controlled by a block 160 by using relations described in a block 150 representing states of different stands of the rolling mill and divided into 3 state equations as described in a block 170 by decomposing each of the blocks $A_1$, $A_2$, $A_3$, $B_1$, $B_2$ and $B_3$ and rearranging them. In this case, since each of the state equations is of third order, an effect can be obtained that the optimum control (stated later) can be realized only by simple matrix calculation of $3 \times 3$.

Now, on the assumption that the elimination of interference between different blocks has been achieved, a case where a so-called optimum control is applied to the control of the rolling mill in this embodiment will be explained. The optimum control means a control method, by which deviations in the state quantities and the operation quantities and the operation quantities are minimized by regulating them appropriately. Since control is effected while taking also the internal structure of the object to be controlled into account, contrarily to the conventional prior art control system, in which attention is paid only to the relation between the input and the output, an effect thereof on the improvement of characteristics is expected.

In this embodiment, as an example, the optimum control system 112 controlling the 2nd stand 102 in Fig. 1 will be explained. The optimum control system 112 receives the state vector X and the measurable external perturbation W and performs predetermined operations (stated later). The result thus obtained is added to the operation result stated previously for eliminating the interference in the non-interference control system 3 and in this way an actuator 117 of the 2nd stand is controlled.

Fig. 6 indicates the internal structure of the optimum control system. In the figure reference numeral 102 represents the 2nd stand, which is the object to be controlled. As described previously, $\Delta S_{P2}$ and $\Delta V_{P2}$ are operation quantities and $\Delta h_2$, $\Delta V_{R2}$ and $\Delta T_2$ are control quantities (state quantities). $\Delta h_2$ is applied to an adder 251 through $F_{11}$ 250; $V_{R2}$ to the adder 251 through $F_{12}$ 252; and $\Delta T_2$ to the adder 251 through $F_{13}$ 253. Here $F_{ij}$ represent feed back parameters obtained by the logic of the optimum control. The output of the adder 251 is inputted in an adder 254.

In the same way, $\Delta h_2$ is inputted in an adder 256 through $F_{21}$ 255; $\Delta V_{R2}$ in the adder 256 through $F_{22}$ 257; and $\Delta T_2$ in the adder 256 through $F_{23}$ 258. The output of the adder 256 is inputted in an adder 259. $\Delta h_2$ and $\Delta T_2$ are inputted in an adder 261 and the output of the adder 261 is applied to adders 263 and 254. $\Delta T_2$ and $\Delta h_2$ is inputted in an adder 266 and the output of the adder 266 is inputted in an adder 269 through an adder 268 and an integrator 269.

The measurable external perturbation $W_2$ is e.g. deviations in the plate thickness on the inlet side $\Delta H_i$ in the embodiment stated above and it is inputted in the adder 254 through $m_1$ 270 and in the adder 259 through $m_2$ 271. $m_i$ are feed forward parameters obtained by the logic of the optimum control.

Here a simulation result indicating the effect of this embodiment will be explained. This simulation is performed, concerning the plate outlet thickness deviations obtained in the case where a steel plate is rolled by a 4-stand tandem rolling mill. The simulation conditions are that the plate thickness before rolling (plate thickness of the starting material) is 2.8 mm, that the plate thickness after rolling (finishing plate thickness) is 0.8 mm, and that the rolling speed is 1000 m/min. An external perturbation of 60 $\mu$m in the thickness is superposed on the starting material. That is, it is supposed that the starting material has an undulation of 60 $\mu$m in the thickness. Fig. 7A indicates a simulation result according to the gauge meter type AGC (Automatic Gauge Control) by the prior art control method for a rolling mill.

This figure shows the process, by which the deviation which is derived from the external perturbation applied to the stand shifts gradually from the 1st stand to the 4th stand. Here the deviation appearing first at the 2nd stand is derived from the tension exerted between the 1st stand and the 2nd stand, when the external perturbation is applied to the 1st stand. The simulation result was that the plate thickness deviation is 6.1 $\mu$m, which is 0.8% of the desired plate thickness.

Fig. 7B shows a simulation result by the control method according to this invention, which indicates that since the decomposition has been effected in unit of the stand, the influences of the 1st stand on the 2nd stand in Fig. 7A have disappeared. Since the separate control of each of the stands can exhibit satisfactorily its ability, the plate thickness deviation at the last stand is 1.9 $\mu$m and therefore it can be understood that it is reduced to about 1/3 of that of the prior art control.

As it can be clearly seen from the comparison of Fig. 7A with Fig. 7B, according to this invention, no influences of one stand on another appear due to the tension between the different stands and therefore it can be understood that the interference is eliminated separately for every stand.

In this way, when this invention is applied to the control of a tandem mill, in addition to the original effect of this invention, the following effect is obtained. That is, since it is possible to control the stands independently, when the number of stand is changed, since it is sufficient to modify quite partly the relevant stand in order to modify the control device and it is unnecessary to modify the whole system, it becomes easier to handle the control system.

For example, in the case where the number of stands is increased, heretofore it is necessary to construct a new control system for the whole tandem mill including newly installed stands and therefore a large scale modification is inevitable. On the contrary, by applying this invention thereto, since the interference between different stands is eliminated, it can be carried out to control the whole tandem mill by adding a new control device only for the newly installed stands. Similarly in the case where a certain stand is put out of operation as a dummy stand (e.g. at flying roll change), it is sufficient to remove the function of the part of the control device, which is in charge of the control of the relevant stand.

Further this invention can be applied to a single stand mill. In a single stand mill, e.g. in the case where control quantities are $\Delta h$, $\Delta V_R$ and $\Delta T$, it can be divided into a block, whose control quantity is $\Delta h$, and a block, whose control quantities are $\Delta V_R$ and $\Delta T$. In this case, since it is possible to divide operation and control quantities into blocks and to eliminate interference therebetween regardless of many or few quantities, there are effects that the freedom for the control of the rolling mill is increased and that high precision control is made possible.

Now another embodiment of this invention will be explained. In this embodiment it is aimed to suppress undesired interference between the non-interference control means for eliminating interference between different blocks and the optimum control means for controlling each block.

In this embodiment, variations in the state quantities due to the non-interference control between different stands of a tandem rolling mill are presumed by using control outputs and a model of the object to be controlled and subtracted from variations in the state quantities of the object to be controlled in order to perform the optimum control.

In Fig. 8, the items equivalent to those indicated in Fig. 1 are indicated by the same reference numbers as those in Fig. 1 and explanation therefor will be omitted. In Fig. 8, the outputs of converters 108, 109 and 110 are inputted in an adder 50. The output of the adder 50 is inputted in adders 52, 53, 54 and 55. The output of the adder 52 is inputted in non-interference control means 56 for eliminating influences of the stands on each other described previously. The output of the non-interference control means 56 is inputted in a non-interference control model 57 and an adder 58. The output of the non-interference control model 57 is inputted in an adder 50 as a quantity to be subtracted and in an adder 52 as a quantity to be added. The outputs of the adders 53, 54 and 55 are inputted in optimum control means 111, 112 and 113, respectively, as state feed back quantities. The optimum control means 111, 112 and 113 determine operation quantities for actuators 116, 117 and 118, respectively, corresponding to the fed back state, which quantities are inputted in the actuators 116, 117 and 118 through optimum control models 59, 60 and 61, respectively, and an adder 58.

In this case the adder 58 doesn't consist of one adder, but of adders producing instructions corresponding to different actuators such as an adder, e.g. for a speed instruction for the actuator 116, a speed instruction of the optimum control means 111 corresponding thereto, to the speed instruction of the non-interference control means 56 for the actuator 116, etc. (refer to Fig. 12). The optimum control model 59, 60 and 61 are models of the object to be controlled, which are used for obtaining feed back constants for the optimum control means 111, 112 and 113, respectively. The outputs of these optimum control models are inputted in the adder 50. As described above, the adder 50 obtains control deviations by subtracting the state varied by summing the the outputs from the different control means presumed by the non-interference control model 57 as well as the optimum control models 59, 60 and 61 from the state of the rolls 101, 102 and 103, which are objects to be controlled.

In Fig. 8 a plurality of signal lines are expressed by one line. Here a mark 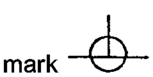 represents a branching of the signal lines and a mark 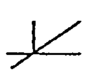 represents gathering or separating simply the signal lines.

Fig. 9 shows a non-interference control system in this embodiment. The items equivalent to those in Fig. 4 are indicated by the same reference numerals as those in Fig. 4.

In Fig. 9, as a gain summing the feed back and the feed forward for eliminating the interference, $\Delta T_1$ 201 is inputted in a control 207 as an input through the adder 50, the adder 52 and the non-interference gain $f_{21}$ 206. $\Delta T_1'$, which is the resultant of the outputs of the models 57 and 59, and $\Delta T_1''$, which is the output of the model 57, are also inputted in the adders 50 and 52, respectively. Further a speed instruction $\Delta\hat{S}_{P2}$ and a push down instruction $\Delta\hat{V}_{P2}$ for the 2nd block are inputted in the control model 57.

In Fig. 9, the part 56 enclosed by a chain-dotted line corresponds to the non-interference control means 56 indicated in Fig.8.

Fig. 10 shows the internal structure of the optimum control means 112 in this embodiment. In the figure, reference numeral 102 indicates the second stand, whose operation quantities are $\Delta S_{P2}$ and $\Delta V_{P2}$ and whose control quantities (state quantities) are $\Delta\tilde{h}_2$, $\Delta\tilde{V}_{R2}$ are $\Delta\tilde{T}_2$. $\Delta h_2$ is inputted in an adder 251 through $F_{11}$ 250; $\Delta V_{R2}$ in the adder 251 through $F_{12}$ 252; and $\Delta T_2$ in the adder 251 through $F_{13}$ 253.

The output of the adder 251 is inputted in the push down instruction $\Delta S_{P2}$ of the object to be controlled 102 considered together with an actuator.

Similarly, $\Delta\tilde{h}_2$ is inputted in an adder 256 through $F_{21}$ 255; $\Delta\tilde{V}_{R2}$ in the adder 256 through $F_{22}$ 257; $\Delta\tilde{T}_2$ in the adder 256 through $F_{23}$ 258; and the output of the adder 256 is inputted in the speed instruction $\Delta V_{P2}$ of the object to be controlled 102 stated above. $\Delta\tilde{h}_2$ and $\Delta T_2$ are inputted in an adder 261 and the output of the adder 261 is applied to adders 266. The output of the adder 266 is inputted in an adder 269 through an adder 268 and an integrator 269. These parts concerning the optimum control enclosed by the chain-dotted line constitute optimum control means 112.

Now Fig. 11 illustrates the construction of a model of the object to be controlled as an example of the non-interference control model 57 as well as the optimum control model 59, 60 and 61. This model is constructed on the basis of the state equations (12) to (14) stated previously, in which as the operation quantities at that time $\Delta S_{P2}$ is changed to $\Delta\bar{S}_{P2}$ and $\Delta V_{P2}$ to $\Delta\bar{V}_{P2}$ as well as as the state quantities $\Delta h_2$ is changed to $\Delta\bar{h}_2$; $\Delta V_{R2}$ to $\Delta\bar{V}_{R2}$; and $\Delta T_2$ to $\Delta\bar{T}_2$.

In Fig. 11, the operation quantity $\Delta S_{P2}$ is an element of the operation matrix and it is applied to an adder 301 through a block $b_{33}$ 300. A signal, which is the output of the adder 301 and the differential value of $\Delta\bar{h}_2$, is the presumed value $\Delta\bar{h}_2$ of the deviations in the plate thickness through an integrator 302. This $\Delta\bar{h}_2$ is applied to an adder 301 through a block $a_{44}$ 303. The speed instruction $\Delta\bar{V}_{P2}$ is applied to an adder 305 through a block $b_{44}$ 304. The output of the adder 305 is the presumed value of the roll peripheral speed deviation $\Delta\bar{V}_{R2}$ through an integrator 306. This $\Delta\bar{V}_{R2}$ is applied to an adder 305 through a block $a_{55}$ 307 and at the same time to another adder 309 through a block $a_{65}$ 308. The output of the adder 309 is the presumed value of the tension deviation $\Delta\bar{T}_2$. This $\Delta\bar{T}_2$ is applied to the adders 309 and 301 through blocks $a_{66}$ 311 and $a_{46}$ 312, respectively. Further the presumed value of the plate thickness deviation $\Delta\bar{h}_2$ is applied to the adder 309 through a block $a_{64}$ 313. All of these blocks constitute a model 315.

A concrete method for eliminating the interference of the non-interference control means and the optimum control means will be explained, referring to Fig. 12. Here the 2nd stand is considered just as in the explanation described above.

In Fig. 12, the presumed state quantities $\Delta\hat{h}_2'$, $\Delta V_{R2}'$ and $\Delta T_2'$ of a non-interference control model 57 are subtracted from the state quantities $\Delta h_2$, $\Delta V_{R2}$ and $\Delta T_2$ of the 2nd stand 102, which is the object to be controlled, respectively, in an adder 50-1 and further the presumed state quantities $\Delta\tilde{h}_2'$, $\Delta\tilde{V}_{R2}'$ and $\Delta\tilde{T}_2'$ of an optimum control model 60 are subtracted therefrom to obtain the plate thickness deviation $\varepsilon_1$, the roll peripheral speed deviation $\varepsilon_2$ and the tension deviation $\varepsilon_3$, respectively. The state quantities $\Delta\hat{h}_2'$, $\Delta\hat{V}_{R2}'$ and $\Delta\hat{T}_2$ presumed by the non-interference control model 57 are added to these control deviations $\varepsilon_1$, $\varepsilon_2$ and $\varepsilon_3$, respectively, in an adder 52 to be the state quantities $\Delta\hat{h}_2$, $\Delta\hat{V}_{R2}$ and $\Delta\hat{T}_2$ fed back to the non-interference control means 56. The outputs of the non-interference control means 56 are a roll position instruction $\Delta\tilde{S}_{P2}$ and a speed instruction $\Delta\tilde{V}_{R2}$, which are operation quantities to the object to be controlled and which are inputted in the non-interference control model 57 and an adder 58 generating instruction values.

In the same way the state quantities $\Delta\tilde{h}_2'$, $\Delta\tilde{V}_{R2}$ and $\Delta\tilde{T}_2$ presumed by the optimum control model 60 stated above (in this case the 2nd stand) are added to the control deviations $\varepsilon_1$, $\varepsilon_2$ and $\varepsilon_3$ described previously in an adder 54 to obtain the state quantities $\Delta\tilde{h}_2$, $\Delta\tilde{V}_{R2}$ and $\Delta\tilde{T}_2$ applied to the optimum control means. The optimum control means 112 performs operations indicated in Fig. 10 to obtain the push down instruction $\Delta\tilde{S}_{P2}$ and $\Delta\tilde{V}_{P2}$, which are inputted in the optimum control model 60 and the adder 58. The outputs of the adder 58 are $\Delta S_{P2}$ and $\Delta V_{P2}$, which are operation quantities of the 2nd stand and which are inputted in the roll position control system and the speed control system, respectively.

Here the non-interference control model 57 and the optimum control model 60 are constituted by the model of object to be controlled 315 indicated in Fig. 11.

In such a construction, if e.g. the plate thickness, the tension and the roll peripheral speed of the 3rd stand vary, the non-interference control means 56 indicated in Fig. 12 emits an instruction to the roll peripheral speed instruction $\Delta\hat{V}_{P2}$ through the feed back gain $f_{26}$ 219 indicated in Fig. 9 so as to compensate influences of the plate thickness, the tension and the roll peripheral speed of the 3rd stand stated above. Receiving this instruction, the 2nd stand 102, which is the object to be controlled, varies its peripheral speed and is operated so as to compensate influences on the tension $\Delta T_2$, which is a control quantity. As the result, deviations in the quantities necessary for realizing the elimination of the interference take place in the state quantities $\Delta h_2$, $\Delta V_{R2}$ and $\Delta T_2$ of the 2nd stand. As stated previously, it is drawbacks of the prior art techniques that, when a state including these deviations is fed back to the optimum control means, the optimum control means 112 reacts so as to annul these deviations and returns the state by the deviations necessary for the elimination of the interference so that the non-interference control is destroyed.

In this embodiment, the quantities, which are necessarily deviated by applying the optimum control means 112 and the non-interference control means 56, are presumed by the models 60 and 57 stated above and the deviation quantities $\varepsilon_1$, $\varepsilon_2$ and $\varepsilon_3$ are obtained by subtracting them from the state of the object to be controlled by means of an adder 50. Usually a state feed back means to feed back deviations produced by external perturbations, model errors, etc. together with the state varied by the control. That is, $\Delta\tilde{h}_2$, $\Delta\tilde{V}_{R2}$ and $\Delta\tilde{T}_2$, which are resultants of the deviations $\varepsilon_1$, $\varepsilon_2$ and $\varepsilon_3$ stated above and the model outputs $\Delta\tilde{h}_2'$, $\Delta\tilde{V}_{R2}'$ and $\Delta\tilde{T}_2'$, are inputted as the state quantities of the optimum control means. Since $\Delta\hat{h}_2'$, $\Delta\hat{V}_{R2}'$ and $\Delta T_2'$ varied by the non-interference control are removed from these $\Delta\tilde{h}_2$, $\Delta\tilde{V}_{R2}$ and $\Delta\tilde{T}_2$, respectively, the optimum control means acts so as to annul the deviations $\varepsilon_1$, $\varepsilon_2$ and $\varepsilon_3$ stated above without destroying the non-interference control system.

Although this invention has been explained in the above, taking the control of the rolling mill as an example, this invention is not restricted thereto, but it can be applied widely to any multi-variable control system. Although concrete explanation is omitted in order to avoid complexity, elimination of interference between the driving system and the steering system in automobiles, elimination of interference between different axes in a multi-axial robot, elimination of interference between different load-dispatching offices in an electric power supply system, etc. can be cited as application examples.

Therefore, hereinbelow, this invention will be explained in a general form. At first an object to be controlled is divided into a plurality of blocks and an aspect, by which the interference is eliminated between blocks, will be explained.

Fig. 13 indicates the outline of a control system, to which this invention is applied. In the figure the state 2 of the object to be controlled 1 is inputted in a non-interference control system 3 and optimum control systems 4, 5 and 6. The optimum control systems 4, 5 and 6 determine operation quantities 7, 8 and 9 for the object to be controlled 1 by using the state 2. The non-interference control system 3 receives the state 2 stated above, operation quantities 7, 8 and 9 of the optimum control systems 4, 5 and 6, and determines operation quantities 10, 11 and 12, joining together the optimum control and the non-interference control, which quantities are outputted to the object to be controlled 1. This invention is characterized, as described above, in that the object to be controlled is divided into a plurality of blocks so that each of them has at least one operation quantity and that at least one block has more than 2 operation or control quantities. Further, the object to be controlled is controlled for every block. The state equation of the object to be controlled is written as follows:

$$\dot{X} = AX + BU \quad (15)$$

Here, by dividing the system matrix A into a finite number of blocks and by representing the diagonal blocks by $A_D$ and the non-diagonal blocks by $A_N$ the system matrix can be expressed by the following Eq. (16);

$$A = A_D + A_N \quad (16)$$

Similarly the control matrix B is divided into the matrix blocks $B_D$ and the non-diagonal block $B_N$.

$$B = B_D + B_N \quad (17)$$

Then, the state vector X is divided into N blocks. However this division into N blocks depends on-the object to be measured and cannot be determined without variation. The division is effected on the point of view that the degree of the relation between operation or control quantities of different blocks obtained by the division is smaller than the degree of the relation between operation or control quantities within each of the blocks.

By dividing the state vector into N blocks the operation vector U corresponding thereto is divided also into N blocks. Similarly, the system matrix and the control matrix are also divided into N.

That is, the system matrix is decomposed into system minor matrices, whose elements are $a_{ij}$; the control matrix into operation minor matrices, which are $b_{ij}$; the state vector into state minor vectors, which are $X_i$; and the operation vector into operation minor vectors, which are $U_i$. In Fig. 14, Eq. (15) is expressed in the form of matrices, by using them. Fig. 15 shows matrices obtained by dividing the system matrix A indicated in Fig. 14 into $A_D$ and $A_N$ and the control matrix B into $B_D$ and $B_N$.

Fig. 16 shows the relation among the object to be controlled 1, the non-interference control system 3 and the optimum control system 4 for controlling a certain block within the object to be controlled.

The object to be controlled indicated in Fig. 16 expresses Eqs. (15), (16) and (17) in a block diagram. That is, a product of the state vector X 14 to the diagonal block system matrix $A_D$ 15 and a product of X 14 to the non-diagonal block system matrix $A_N$ 16 are inputted in an adder 13. That is, a product of the system matrix A to the state vector X 14, which is obtained by multiplying Eq. (16) by X, is produced in the adder 13 (the following Eq. (18)).

$$A_DX + A_NX = AX \quad (18)$$

A product of the operation vector U 18 to the diagonal control matrix $B_0$ 19 is inputted in an adder 17 and a product of the operation vector U 18 to the non-diagonal control matrix BN 20 is inputted therein through the adder 13. That is, the product of the control matrix B to the operation vector U, expressed by the following Eq. (19);

$$B_DU + B_NU = BU \quad (19)$$

which is obtained by multiplying Eq. (17) by U 18, is inputted therein. Then the following Eq. (20);

$$AX + BU \quad (20)$$

which is the sum thereof with the product of the system matrix A to the state vector X, obtained by Eq. (18), is obtained in the adder 17. According to Eq. (15) the value thereof is equal to the differential value $\dot{X}$ 21 of the state vector X. Since X 14 is an integral of $\dot{X}$ 21, $\dot{X}$ 21 is integrated through an integral matrix 22 and the state vector X 14 is obtained. In 22, S represents a Laplacian operator and II is a unit matrix.

Here it is supposed that the state vector is an n-th order vector and the operation vector has m inputs, the system matrix is a matrix of n x n and the control matrix is a matrix of n x m. When the internal state of the object to be controlled 1 is taken into account, to perform the non-interference control means that the system matrix A and the control matrix B include only diagonal block elements. The adder 17 being considered, the product of the state vector X 14 to the non-diagonal system matrix $A_N$ 16 is applied as an interference term by feed back and the product of the operation vector U 18 to the non-diagonal control matrix $B_N$, which is the other interference term, is applied by feed forward. In order to perform the non-interference control with a high efficiency, it is desirable to effect feed forward compensation for the feed forward element and feed back compensation for the feed back element. This is because parallel treatment in the control system is possible in this way.

Since the control matrix B adds the operation vector U to the differential of the state vector X by feed forward, this non-interference component is removed by feed forward compensation.

An instruction vector r 23 produced within the non-interference control system 3 becomes the operation vector U through feed forward compensation G 24 and is added to the control matrix B.

In this case, the general form of the control matrix B, when the non-interference control is performed, being represented by $B'_D$, if it is supposed that the non-interference control (feed forward term) is performed, the following Eq. (21) is valid;

$$(B_D + B_N)G = B_D' \quad (21)$$

According to a method used generally in this field, by multiplying a pseudo inverse matrix of $(B_D + B_N)$, as multiplicand, by the respective members of Eq. (21), Eq. (22) is obtained;

$$G = (B_D + B) - B_D' \quad (22)$$

where $(B_D + B)-$ means the pseudo inverse matrix of $B_D + B$.

Fig. 17 shows a complete example of the method for realizing Eq.(22) and indicates the relation among the feed forward compensation element G 24, the operation vector U 18, the diagonal and non-diagonal control matrices $B_D$ and $B_N$, and the differential $\dot{X}$ 21 of the state vector. It illustrates $U_i$ related to the i-th block in the operation vector U and the instruction vector 23 therefore. The interference terms on the other blocks will be considered here, referring to Fig. 17.

Now the influences of the i-th block on the j-th block are considered. The instruction vector $r_i$ 23 becomes the operation minor vector $u_i$ 18 through the non-interference feed forward compensation element $j_{ii}$ 50 and further the differential vector 21 of the state minor vector $X_j$ of the j-th block thorough the control minor matrix $b_{ij}$ 51 and an adder 54. Quantities based on r other than the j-th element indicated in the figure are inputted in the adder 54. These relations being expressed by an equation, the following Eq. (23) is obtained;

$$X_{ji} = b_{ij} \cdot g_{ii} r_i \quad (23)$$

where $X_{ij}$ represents the interference component of the i-th block. In order to annul this term, $r_i$ is added to the

operation minor vector $u_j$ through non-interference block elements $g_{ij}$ 52 newly added. The operation quantity applied from uj is added to the differential of the state minor vector $X_j$ through the control minor matrix $b_{ij}$. The value thereof is expressed by the following Eq. (24);

$$\dot{X}_{ji}' = b_{jj} g_{ij} r_i \quad (24)$$

The interference of the i-th block on the j-th block is eliminated, if the sum of Eqs. (22) and (23) is zero (following Eq. (25)).

$$b_{ij} \cdot g_{ij} r_i + b_{jj} g_{ij} r_i = 0 \quad (25)$$

Rearranging Eq. (25), the following Eq. (26) is obtained;

$$g_{ij} = b_{jj} - b_{jj} g_{ii} \quad (26)$$

If these procedures are carried out successively, until each of the elements becomes scalar (until 1-input-1-output is realized), the elimination of the interference is achieved as a whole.

Now the elimination of the interference of the interference component in the system matrix will be considered. Since the state is fed back by the feed back component, cancellation cannot be effected by the feed forward operation of this interference component operation quantity. Therefore the state vector X is inputted in the feed back compensation element $F_B$ 25 indicated in Fig. 16; the output of $F_B$ 25 is applied to an adder 26; and the output of the adder 26 is applied to the feed forward compensation element G 24. Then the output thereof is applied to the differential X 21 of the state vector through the control matrix B (the first term in the left member of the following Eq. (27)).

On the other hand, concerning the interference term, the state vector X 14 is applied to the differential $\dot{X}$ 21 of the state vector through the non-diagonal system matrix $A_N$ 16 (the second term in the left member of the following Eq. (27)). When this term is annulled, the elimination of the interference is established. Therefore the elimination of the interference is achieved by determining the gain of the feed back compensation element $F_B$ 25 so that the following equation is valid;

$$\dot{X}_{ji} = BGF_B X + A_N X = 0 \quad (27)$$

Rearranging Eq. (26), the following Eq. (28) is obtained;

$$BGF_B = - A_N$$

$$F_B = - G^{-} B^{-} A_N \quad (28)$$

This non-interference control system 3 is disposed only for eliminating always the interference term of the object to be controlled and it is not constructed so as to be a control system making the object to be controlled respond as desired. Therefore, for this reason a control system for determining the operation quantities for every block is necessary. Since the elimination of the interference between different blocks is already achieved, as the control system each of the blocks can be considered as an independent object to be controlled and if they are separately controlled, the kind thereof is out of the question. In this way it is an important effect that the freedom of the choice of the control system can be increased. Here the case where the optimum control system is adopted will be explained.

In Fig. 16, the state vector X 14 and a measurable external perturbation W are inputted in the optimum control system 4. The optimum control system performs operations on the basis of these inputs and outputs the result to an adder 26. The output of the optimum control system 4 described above is added to the output of the non-interference feed back compensation element $F_B$ 25 described above and the sum thereof is inputted in the feed forward compensation element 24 stated above.

The optimum control system 4 can be used for every block. The internal structure of the optimum control system for the i-th block is shown in Fig. 18 as an example. In the figure, the measurable external perturbation $W_i$ is inputted in the optimum control object 26 (hereinbelow called simply control object) including the object to be controlled 1 together with the non-interference control system as well as in an adder 28 through the optimum feed forward element M 27.

An instruction vector $r_i$ for obtaining a desirable response of the control system is inputted in an adder 30 and at the same time the output $y_i$ of the control object 26 is inputted therein to be subtracted. The deviation thereof is inputted in the optimum feed back element $F_i$ 29 together with the state vector Xi of the control object 26 through an integral element 31. The output of the optimum feed back element 29 is inputted in an adder 28. The output of the adder 28 is applied to the control object as an instruction 7.

The values of the optimum control element $M_i$ 27 and $F_i$ 29 can be obtained in the following manner.

That is, compensation elements $F_i$ and $M_i$ are obtained, which minimize the state equation of the object to be controlled;

$$\dot{X}_i = A_i X_i + B_i V_i + E_i W_i$$

$$y = C_i X_i + D_i V_i \quad (29)$$

as well as an evaluation function

$$J = \int (X_i^T Q X_i + V_i^T R V_i)\, dt \quad (30)$$

By using the solution P of the Riccati equation represented by the following Eq. (31);

$$P_i\{A_i - B_iR_i^{-1}D_i^TQ_iC_i\} + \{A_i^T - C_i^TQ_iD_iR_i^{-1}B_i^T\}P_i - P_iB_iR^{-1}B_iP_i + C_i^T\{Q_i - Q_iD_iR_i^{-1}D_i^TQ_i\}C_i = O \quad (31)$$

$F_i$ can be obtained by the following Eq. (32);

$$F_i = -(P_i + D_i^TQ_iD_i)^{-1}(D_i^TQ_iC_i + B_iP_i) \quad (32)$$

Mi can be obtained by the following Eqs. (33) and (34);

$$\Gamma_i = -(A_i + B_iF_i)^{-1}B_i \quad (33)$$

$$\Theta_i = -(A_i + B_iF_i)^{-1}E_i \quad (34)$$

with Fi stated above, as the following Eq. (35);

$$M_i = -(\Gamma_i^TP_i\Gamma_i)^{-1}P_i^TP_i\Theta_i \quad (35)$$

Further, in the above example, the optimum control system 4 is treated as an optimum regulator. Since the optimum regulator can be easily extended to an optimum servo, this invention can be applied to both of them.

Furthermore, apart from the optimum control system described above, various control systems can be applied to the means controlling each of blocks used for realizing this invention. They are e.g. the pole assignment method by state feed back, the PID control, etc. In particular, according to the embodiment described above, since the interference between different stands of a tandem mill is eliminated, it is possible to apply the usual PID control separately to each of the stands. It is an important effect of this invention that a complicated system can be controlled by such a simple control system.

Now another aspect of this invention to suppress the interference among a plurality of systems having different functions will be explained.

Fig. 19 illustrates the outline of a control system, to which this invention is applied. In the figure an operation quantity u is inputted in the object to be controlled 1, whose inner state is expressed by a state equation $\dot{X} = AX + Bu$, and a state X is outputted therefrom. Here the state X is a vector of order n (n=1, 2, ...); the operation quantity u is a vector of order m (m=1, 2, ...); a system matrix A is a matrix of n x n; and an operation matrix B is a matrix of n x m. The operation quantity u is the output of an adder 2, where the outputs $\bar{u}$, $\hat{u}$ and $\tilde{u}$ of control means 3, 4 and 5, respectively, are summed.

The output of the first control means 3 is inputted in a model 6 of the object to be controlled; the output $\bar{x}$ of the model 6 is inputted in an adder 7; and the adder 7 subtracts the output $\bar{x}$ of the model 6 stated above from the state x of the object to be controlled 1 to obtain a control deviation $\varepsilon_1$.

In the same way the output $\hat{u}$ of the second control means 4 is inputted in the adder 2 and a model 9; the state $\hat{x}$ of the model 9 is inputted in an adder 10; and the adder 10 subtracts $\hat{x}$ stated above from the control deviation $\varepsilon_1$ stated above to output a control deviation $\varepsilon_2$.

In the same way the output $\tilde{u}$ of the k-th (k being an integer not smaller than 2) control means 5 is inputted in the adder 2 and a model 12 of the object to be controlled 1; the state $\tilde{x}$ of the model 12 is inputted in an adder 13; and the adder 13 subtracts the state $\tilde{x}$ stated above from the control deviation $\varepsilon_2$ stated above to obtain a control deviation $\varepsilon$. This control deviation $\varepsilon$ and the state $\bar{x}$ stated above are added to each other in an adder 8 to form a state $\bar{x}'$, which is inputted in the control means 3 together with an instruction vector $r_1$.

In the same way the control deviation $\varepsilon$ is added to the states $\hat{x}$ and $\tilde{x}$ in adders 11 and 14 to form states $\hat{x}'$ and $\tilde{x}'$, respectively. These states $\hat{x}'$ and $\tilde{x}'$ are inputted in the control means 4 and 5 together with instruction vectors $r_2$ and $r_3$, respectively.

By means of such a structure, in the case a plurality of control means 3, 4 and 5 are applied to one object to be controlled 1, it is possible to eliminate the interference between different control means. The working mode thereof will be explained below. Fig. 20A illustrates the structure in the case where the first control means 3 is applied to the object to be controlled 1. In this case the state x is fed back to the control means 3, which produces the instruction $\bar{u}$, taking the instruction $r_1$ into account, which instruction $\bar{u}$ is inputted in the object to be controlled 1.

This working mode decomposed in detail is shown in Fig. 20B. That is, if it is supposed that a model of the object to be controlled 1 is represented by 6, the control means 3 is designed on the basis of a control theory, adopting the model 6 as a control model. That is, the control means 3 presumes that the object to be controlled 1 is varied as expressed by the state $\bar{x}$ of the control model 6, when a certain operation quantity $\bar{u}$, which is the output thereof, is inputted in the object to be controlled.

However, in practice, deviations take place due to non-linearity etc. of the object to be controlled 1, external perturbation or precision in the identification of the model. These produce $\varepsilon$ in Fig. 20B. This means that the state x of the object to be controlled 1 is divided into the state $\bar{x}$ varying depending on the control and the control deviation $\varepsilon$. Since the control rule by the control means is a multi-variable control and the state is fed back, the state x representing the sum of the control deviation ε separated by the adder 11 and the state $\bar{x}$ varied by the control is fed back. In other words, owing to the structure indicated in Fig. 20A, it becomes possible to divide the state into the control deviation ε and the state varying depending on the control by the control means by adopting the model 6.

Now Fig. 21 show a case where two control means 3 and 4 are applied to one object to be controlled. The working modes of the control means 3, the model 6 and the object to be controlled 1 are identical to those indicated in Fig. 20B, but the operation quantity u to the object to be controlled 1 is the sum of the operation quantities $\bar{u}$ and $\hat{u}$. Further the output $\varepsilon_1$ of an adder 7 includes also the state varying depending on the control by the control means. Therefore the state $\hat{x}$ varied by the control means 4 is presumed by means of a model 9 and the parts of the state, which have been varied, is subtracted from $\varepsilon_1$ by means of an adder 10 to obtain the control deviation ε. This control deviation ε is independent of both the control means 3 and 4. That is, the influences of the control means 3 and 4 are excluded from ε. As the result the control means 3 and 4 can effect their control independently.

Next, as viewed from the control means 3, the structure indicated in Fig. 21 is equivalent to Fig. 20B. On the other hand, if the second control means 4 is replaced by 3 and the model 6 by 9, it works similarly and thus they are ensured to work independently of each other.

As described above, according to the embodiment of this invention, since the variations of the state produced by the fact that the other control means works can be separated, in the case where one object to be controlled by more than 2 control means, the interference between different control means can be eliminated.

Fig. 22 illustrates another embodiment of this invention. The difference thereof from that indicated in Fig. 19 consists in that only one model 15 is disposed for the object to be controlled 1, contrarily to the fact that the models 6, 9 and 12 of the object to be controlled 1 are used as indicated in Fig. 19 and the outputs thereof are applied to the adders 7, 10 and 13. The operation quantity u of the model 15 is identical to the operation quantity of the object to be controlled 1. The state x′ of the model 15 is inputted in the adder 7 and the state x′ stated above of the model 15 is subtracted from the state x of the object to be controlled 1 in the adder 7 to obtain the deviation ε. Just as indicated in Fig. 9, ε is fed back to the control means 3, 4 and 5 through the adders 8, 11 and 14.

By means of such a structure the control deviation ε is added to the states $\bar{x}$, $\hat{x}$ and $\tilde{\bar{x}}$ , which are the outputs of the models 6, 9 and 12, respectively, and the results are inputted in the respective control means 3, 4 and 5 as the state feed back. As the result the working mode in this embodiment is equivalent to that for the control system indicated in Fig. 19.

On the other hand, by means of such a structure, since there is disposed a model 15 acting similarly to the object to be controlled 1, it is possible to be obtained the state x′ of the model 15 corresponding to the state x of the object to be controlled 1, and thus an advantage can be obtained that the working mode of the control system becomes clearer. In addition, turning of the model is facilitated.

Fig. 23 illustrates still another embodiment of this invention. The difference from the embodiment indicated in Fig. 16 consists in that the model 60 for the optimum control in Fig. 16 is omitted.

In Fig. 23, the state x of an object to be controlled 102 is inputted in a non-interference means 56 and an adder 50. The non-interference 56 determines an operation quantity u′ by using the state x, which quantity u′ is inputted in an adder 58 and a non-interference control model 57. The output $\bar{x}$ of the non-interference control model 57 is inputted in the adder 50, which subtracts $\hat{x}$ from the state x stated above to obtain a deviation ε. It is only the state deviated due to the optimum control means 112 that is removed in the deviation ε, which is fed back to an optimum control means 112. The optimum control means 112 determines an operation quantity R by a state feed back operation. This operation quantity R is inputted in an adder 58. The adder 58 adds R to u′ stated above and determines an operation quantity R applied to the object to be controlled.

In this embodiment almost no state deviations of the optimum control model indicated in Fig. 16 take place. This is because the control low of the optimum control means 112 is a problem for the optimum regulator, which works so as to annul always the state deviations, and therefore almost no state deviations take place.

On the other hand, taking a tandem rolling mill as an example, in the case where state deviations take place in another stand, since the state deviations are used for the feed forward control, the reference value for the control is moved and the non-interference control system effects the control on the assumption that the state deviations take place.

Bringing the above statements together, it can be understood that the model cannot be omitted for a servo problem, a tracking problem, a feed forward control, etc., for which state deviations are presumed, but it can be omitted for a control system such as a regulator problem, etc. for which deviations are kept to be zero.

As explained above, according to this invention, even for a large scale object to be controlled having a number of control quantities, since it is divided into a plurality of blocks so that interference between different blocks is eliminated, it can be achieved to realize a non-interference control suitable for eliminating interference between different control quantities without enlarging nor complicating the control device.

Further more than two control devices having different functions can be used for an object to be controlled, while eliminating interference therebetween. Furthermore another effect can be obtained that control deviations are reduced by having each of the control devices take charge of a field, in which it is strong.

## Claims

1. A control device arranged to control an object (1) which receives a plurality of operation quantities (U) and produces a plurality of state quantities (X) based on the received operation quantities (U) wherein a relationship between a vector of said plurality of state quantities and a vector of said plurality of operation quantities is defined by a control matrix (19,20) and a system matrix (15,16);

   characterised in that:

   the object (1) is divided into a plurality of control blocks, each block receiving at least one of said plurality of operation quantities and producing at least one of said plurality of state quantities;

   each of said control matrix and said system matrix is divided into diagonal component matrices (19;15) and non-diagonal component matrices (20;16), each of said component matrices (19,20;15,16) being determined based on the relationship between said at least one operation quantity and said at least one state quantity received by/produced at each of said control blocks; and

   non-interference control means (3) is provided which includes feed-forward compensation means (24) for cancelling each of said non-diagonal component matrices of said control matrix and feed back compensation means (25) for cancelling each of said non-diagonal component matrices of said system matrix.

2. A control device according to claim 1, wherein said object is a tandem rolling mill having a plurality of rolling stands (101a,101b,101c,101d) and said control blocks belong to respective rolling stands.

3. A control device according to claim 1, further comprising a compensator (217,218,219) provided between at least one of the control blocks and another one of the control blocks for cancelling the effects of said at least one operation quantity or state quantity of said another control block on said at least one state quantity of said one control block.

4. A control device according to claim 1, wherein each of said control blocks includes a feedback control unit to feed its state quantity back to its operation quantity.

5. A control device according to claim 4, wherein said feedback control unit is an optimum regulator.

6. A control device according to claim 4, wherein said feedback control unit is an optimum servo.

## Patentansprüche

1. Regelungsvorrichtung zum Regeln einer Einrichtung (1), die mehrere Betriebsgrößen (U) empfängt und mehrere Zustandsgrößen (X) auf Grundlage der empfangenen Betriebsgrößen (U) erzeugt, wobei die Beziehung zwischen einem Vektor für die mehreren Zustandsgrößen und einem Vektor für die mehreren Betriebsgrößen durch eine Regelungsmatrix (19, 20) und eine Systemmatrix (15, 16) definiert ist;

   **dadurch gekennzeichnet, daß**

   - die Einrichtung (1) in mehrere Regelungsblöcke unterteilt ist, von denen jeder mindestens eine der mehreren Betriebsgrößen empfängt und mindestens eine der mehreren Zustandsgrößen erzeugt;
   - wobei sowohl die Regelungsmatrix als auch die Systemmatrix in Diagonalkomponenten-Matrizen (19; 15) und Nichtdiagonalkomponenten-Matrizen (20; 16) unterteilt ist, wobei jede dieser Komponentenmatrizen (19, 20; 15, 16) auf Grundlage der Beziehung zwischen der mindestens einen Betriebsgröße und der mindestens einen Zustandsgröße bestimmt ist, wie sie von jedem der Regelungsblöcke empfangen/erzeugt werden; und
   - eine wechselwirkungsfreie Regelungseinrichtung (3) vorhanden ist, die eine Mitkopplungskompensationseinrichtung (24) zum Aufheben jeder der Nichtdiagonalkomponenten-Matrizen der Regelungsmatrix sowie eine Rückkopplungskompensationseinrichtung (25) zum Aufheben jeder der Nichtdiagonalkomponenten-Matrizen der Systemmatrix beinhaltet.

2. Regelungsvorrichtung nach Anspruch 1, bei der die Einrichtung ein Kaskadenwalzwerk mit mehreren Walzstationen (101a, 101b, 101c, 101d) ist, wobei die Regelungsblöcke zu jeweiligen Walzstationen gehören.

3. Regelungsvorrichtung nach Anspruch 1, ferner mit einem Kompensator (217, 218, 219), der zwischen mindestens einem der Regelungsblöcke und einem anderen der Regelungsblöcke vorhanden ist, um die Wirkungen der zumindest einen Betriebsgröße oder Zustandsgröße des anderen Regelungsblocks auf die zumindest eine Zustandsgröße des einen Regelungsblocks aufzuheben.

4. Regelungsvorrichtung nach Anspruch 1, bei der jeder der Regelungsblöcke eine Rückkopplungsregelungeinheit zum Rückführen seiner Zustandsgröße auf seine Betriebsgröße aufweist.

5. Regelungsvorrichtung nach Anspruch 4, bei der die Rückkopplungsregelungseinheit ein Optimalregler ist.

6. Regelungsvorrichtung nach Anspruch 4, bei der die Rückkopplungsregelungseinheit eine Optimalservoeinrichtung ist.

## Revendications

1. Dispositif de commande agencé pour commander un objet (1) qui reçoit un certain nombre de quantités d'opérations (U) et produit un certain nombre de quantités d'états (X) basées sur les quantités d'opérations reçues (U) où une relation entre un vecteur de ladite pluralité de quantités d'états et un vecteur de ladite pluralité de quantités d'opérations est définie par une matrice de commande (19, 20) et une matrice de système (15, 16) ;
caractérisé en ce que :
l'objet (1) est divisé en un certain nombre de blocs de commande, chaque bloc recevant au moins l'une desdites quantités d'opérations et produisant au moins l'une desdites quantités d'états ;
chacune desdites matrices de commande et desdites matrices de système est divisée en matrices de composantes en diagonale (19 ; 15) et en matrices de composantes non en diagonale (20 ; 16), chacune desdites matrices de composantes (19, 20 ; 15, 16) étant déterminée sur la base de la relation entre ladite au moins une quantité d'opération et ladite au moins une quantité d'état reçues par/produite à chacun desdits blocs de commande ; et
un moyen de commande sans interférence (3) est prévu qui comprend un moyen de compensation anticipé (24) pour supprimer chacune desdites matrices de composantes non en diagonale de ladite matrice de commande et un moyen de compensation de rétroaction (25) pour supprimer chacune desdites matrices de composantes non en diagonale de ladite matrice de système.

2. Dispositif de commande selon la revendication 1, dans lequel l'objet précité est un laminoir en tandem ayant un certain nombre de bancs de laminage (101a, 101b, 101c, 101d) et les blocs de commande précités appartiennent aux bancs de laminage respectifs.

3. Dispositif de commande selon la revendication 1, comprenant de plus un compensateur (217, 218, 219) prévu entre au moins l'un des blocs de commande et un autre des blocs de commande pour supprimer les effets d'au moins la quantité d'opération précitée ou de la quantité d'état précitée dudit autre bloc de commande sur au moins ladite quantité d'état du bloc de commande.

4. Dispositif de commande selon la revendication 1, dans lequel chacun des blocs de commande précités comprend une unité de commande de rétroaction pour boucler sa quantité d'état à sa quantité d'opération.

5. Dispositif de commande selon la revendication 4, dans lequel l'unité de commande de rétroaction précitée est un régulateur optimal.

6. Dispositif de commande selon la revendication 4, dans lequel l'unité de commande de rétroaction est un asservissement optimal.

F I G. 1

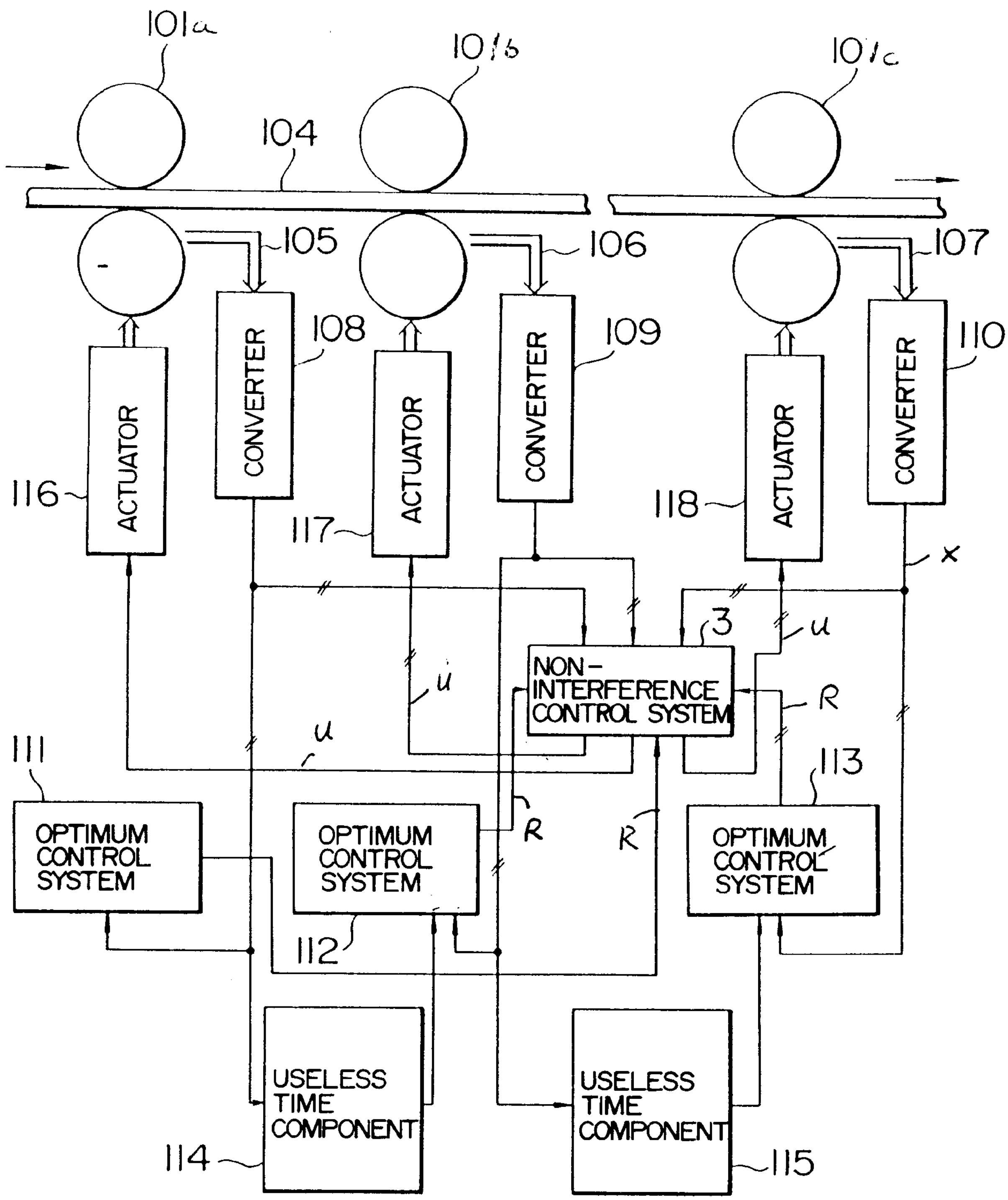

101a
101b
101c
104
105
106
107
108
109
110
CONVERTER
CONVERTER
CONVERTER
ACTUATOR
ACTUATOR
ACTUATOR
116
117
118
x
u
3
NON-INTERFERENCE CONTROL SYSTEM
R
111
112
113
OPTIMUM CONTROL SYSTEM
OPTIMUM CONTROL SYSTEM
OPTIMUM CONTROL SYSTEM
USELESS TIME COMPONENT
USELESS TIME COMPONENT
114
115

FIG. 2

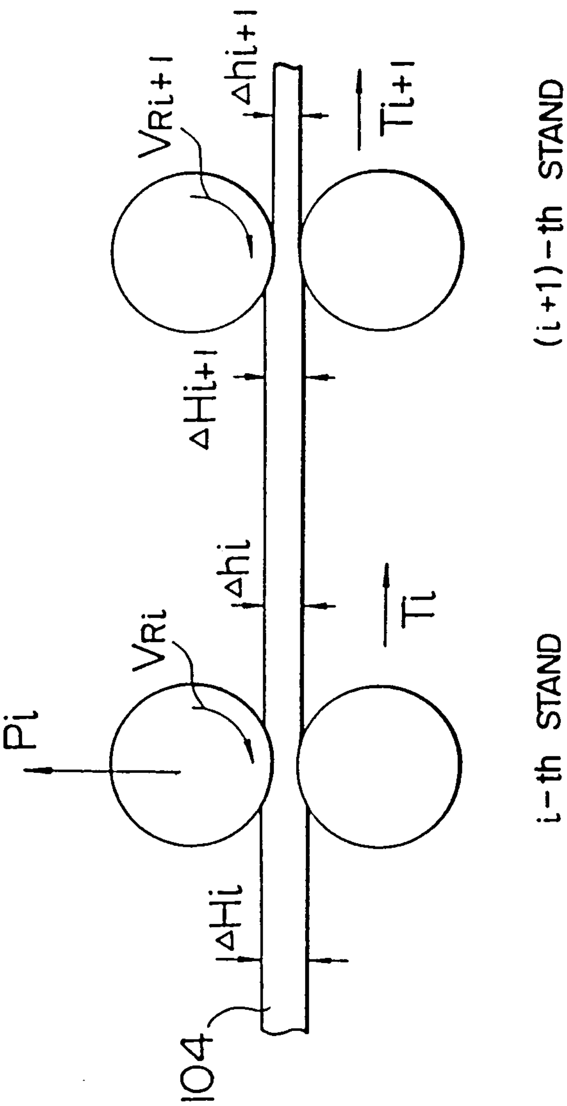

FIG. 3

(A)

$$\frac{d}{dt}\begin{pmatrix}\Delta h_1\\ \Delta V_{R1}\\ \Delta T_1\\ \Delta h_2\\ \Delta V_{R2}\\ \Delta T_2\\ \Delta h_3\\ \Delta V_{R3}\\ \Delta T_3\end{pmatrix} = \begin{pmatrix} a_{11} & 0 & a_{13} & 0 & 0 & 0 & 0 & 0 & 0\\ 0 & a_{22} & 0 & 0 & 0 & 0 & 0 & 0 & 0\\ a_{31} & a_{32} & a_{33} & a_{34} & a_{35} & a_{36} & 0 & 0 & 0\\ 0 & 0 & a_{43} & a_{44} & 0 & a_{46} & 0 & 0 & 0\\ 0 & 0 & 0 & 0 & a_{55} & 0 & 0 & 0 & 0\\ 0 & 0 & a_{63} & a_{64} & a_{65} & a_{66} & a_{67} & a_{68} & a_{69}\\ 0 & 0 & 0 & 0 & 0 & a_{76} & a_{77} & 0 & a_{79}\\ 0 & 0 & 0 & 0 & 0 & 0 & 0 & a_{88} & 0\\ 0 & 0 & 0 & 0 & 0 & a_{96} & a_{97} & a_{98} & a_{99}\end{pmatrix}\begin{pmatrix}\Delta h_1\\ \Delta V_{R1}\\ \Delta T_1\\ \Delta h_2\\ \Delta V_{R2}\\ \Delta T_2\\ \Delta h_3\\ \Delta V_{R3}\\ \Delta T_3\end{pmatrix} + \begin{pmatrix} b_{11} & 0 & 0 & 0 & 0 & 0\\ 0 & b_{22} & 0 & 0 & 0 & 0\\ 0 & 0 & 0 & 0 & 0 & 0\\ 0 & 0 & b_{33} & 0 & 0 & 0\\ 0 & 0 & 0 & b_{44} & 0 & 0\\ 0 & 0 & 0 & 0 & 0 & 0\\ 0 & 0 & 0 & 0 & b_{55} & 0\\ 0 & 0 & 0 & 0 & 0 & b_{66}\\ 0 & 0 & 0 & 0 & 0 & 0\end{pmatrix}\begin{pmatrix}\Delta S_{P1}\\ \Delta V_{P1}\\ \Delta S_{P2}\\ \Delta V_{P2}\\ \Delta S_{P3}\\ \Delta V_{P3}\\ \Delta S_{P4}\\ \Delta V_{P4}\end{pmatrix}$$

$$+ \begin{pmatrix} d_{11} & d_{12} & 0 & 0\\ 0 & 0 & 0 & 0\\ d_{31} & d_{32} & d_{33} & 0\\ 0 & 0 & d_{43} & 0\\ 0 & 0 & 0 & 0\\ 0 & 0 & d_{53} & d_{54}\\ 0 & 0 & 0 & d_{64}\\ 0 & 0 & 0 & 0\\ 0 & 0 & 0 & d_{66}\end{pmatrix}\begin{pmatrix}\Delta T_o\\ \Delta H_1\\ \Delta H_2\\ \Delta H_3\end{pmatrix}$$

(B) $\dot{X} = AX + BU + DW$

FIG. 4

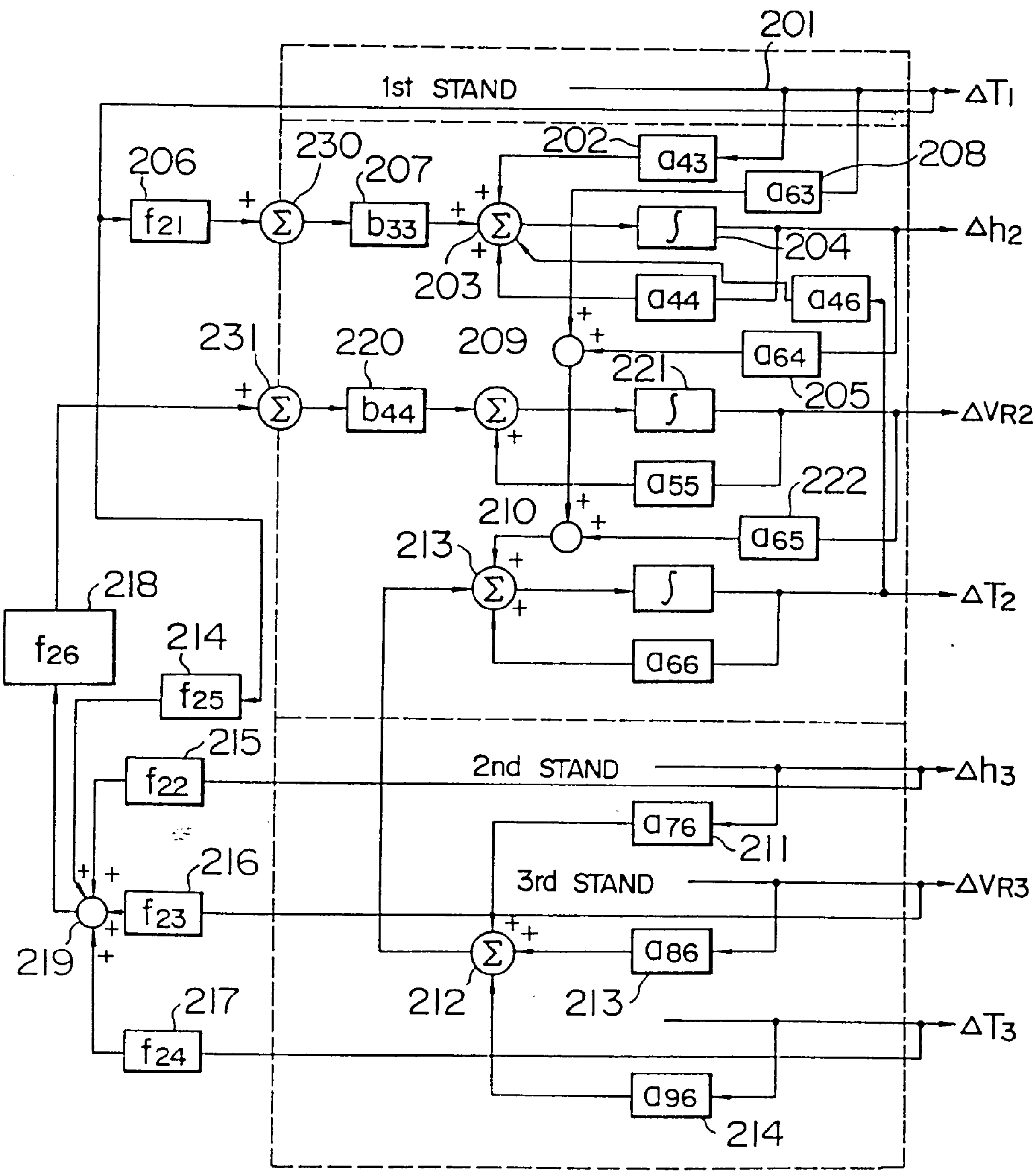

201
1st STAND
ΔT1
202
a43
208
a63
206
230
207
f21
b33
Δh2
204
203
a44
a46
231
220
209
a64
221
205
b44
ΔVR2
a55
222
210
a65
213
ΔT2
a66
218
f26
214
f25
215
f22
2nd STAND
Δh3
a76
211
216
3rd STAND
ΔVR3
f23
219
a86
212
213
217
ΔT3
f24
a96
214

# FIG. 5

$$X=\begin{pmatrix}\Delta h_1\\ \Delta V_{R1}\\ \Delta T_1\\ \Delta h_2\\ \Delta V_{R2}\\ \Delta T_2\\ \Delta h_3\\ \Delta V_{R3}\\ \Delta T_3\end{pmatrix}=\begin{pmatrix}X_1\\ X_2\\ X_3\end{pmatrix}\quad U=\begin{pmatrix}\Delta S_{P1}\\ \Delta V_{R1}\\ \Delta S_{P2}\\ \Delta V_{R2}\\ \Delta S_{P3}\\ \Delta V_{R3}\end{pmatrix}=\begin{pmatrix}U_1\\ U_2\\ U_3\end{pmatrix}\quad W=\begin{pmatrix}\Delta T_0\\ \Delta H_1\\ \Delta H_2\\ \Delta H_3\end{pmatrix}=\begin{pmatrix}W_1\\ W_2\\ W_3\end{pmatrix}$$

$$A_1=\begin{pmatrix}a_{11} & 0 & a_{13}\\ 0 & a_{22} & 0\\ a_{31} & a_{32} & a_{33}\end{pmatrix}\quad A_2=\begin{pmatrix}a_{44} & 0 & a_{46}\\ 0 & a_{55} & 0\\ a_{64} & a_{65} & a_{66}\end{pmatrix}\quad A_3=\begin{pmatrix}a_{11} & 0 & a_{19}\\ 0 & a_{88} & 0\\ a_{47} & a_{98} & a_{99}\end{pmatrix}$$

$$B_1=\begin{pmatrix}b_{11} & 0\\ 0 & b_{22}\end{pmatrix}\quad B_2=\begin{pmatrix}b_{33} & 0\\ 0 & b_{44}\end{pmatrix}\quad B_3=\begin{pmatrix}b_{55} & 0\\ 0 & b_{66}\end{pmatrix}$$

150

⇓

$$\dot{X}=AX+BU$$

$$=\begin{pmatrix}A_1 & 0 & 0\\ 0 & A_2 & 0\\ 0 & 0 & A_3\end{pmatrix}\begin{pmatrix}X_1\\ X_2\\ X_3\end{pmatrix}+\begin{pmatrix}B_1 & 0 & 0\\ 0 & B_2 & 0\\ 0 & 0 & B_3\end{pmatrix}\begin{pmatrix}U_1\\ U_2\\ U_3\end{pmatrix}$$

160

⇓

$$\dot{X}_1=A_1X_1+B_1U_1\quad,\quad \dot{X}_2=A_2X_2+B_2U_2$$

$$\dot{X}_3=A_3X_3+B_3U_3$$

170

F I G. 6

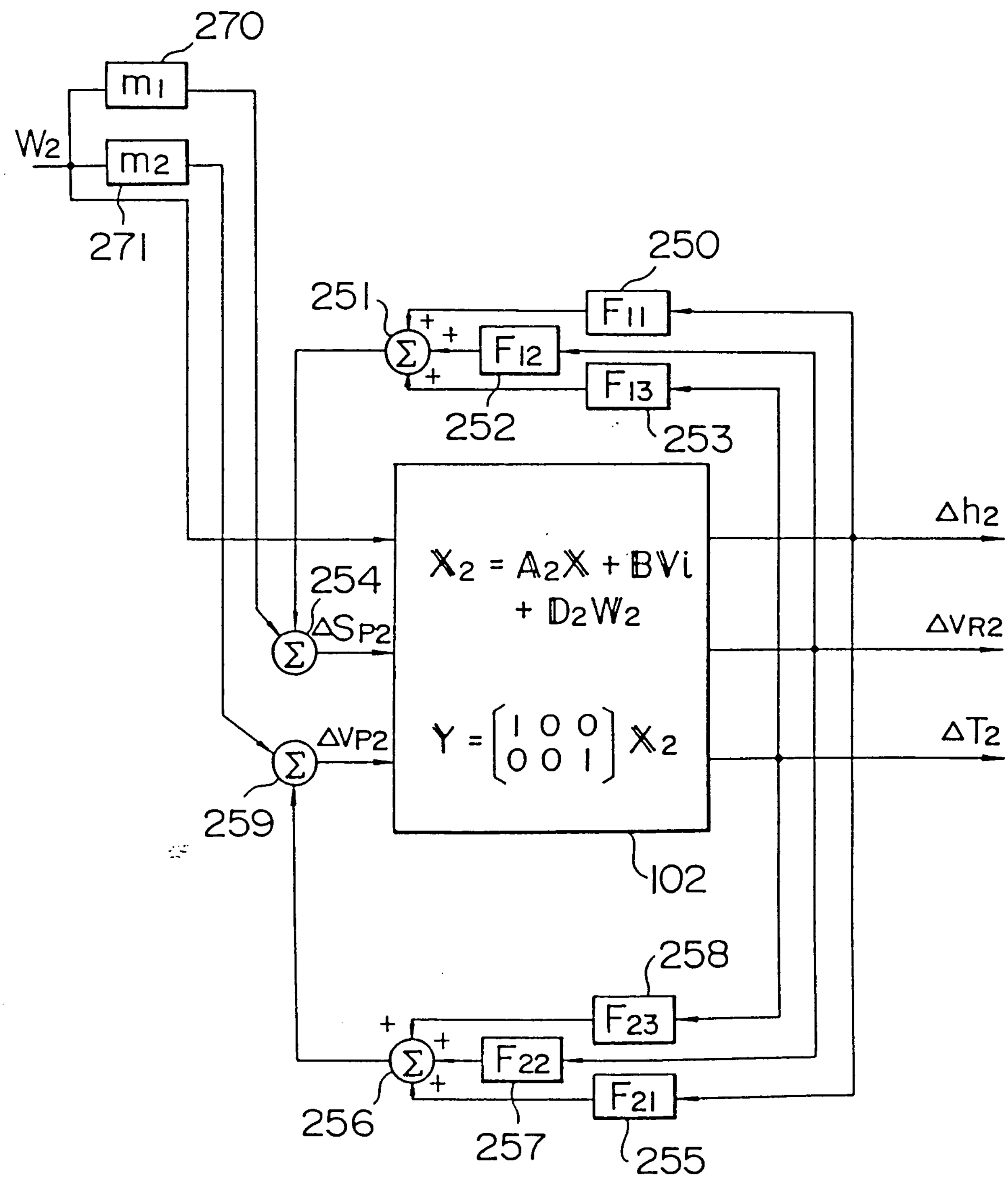
270
m1
W2
m2
271
250
251
F11
+
+
F12
+
F13
252
253
Δh2
X2 = A2X + BVi
+ D2W2
254
ΔSP2
ΔVR2
ΔVP2
Y = [1 0 0; 0 0 1] X2
ΔT2
259
102
258
+
F23
+
F22
+
F21
256
257
255

F I G. 7A
PRIOR ART

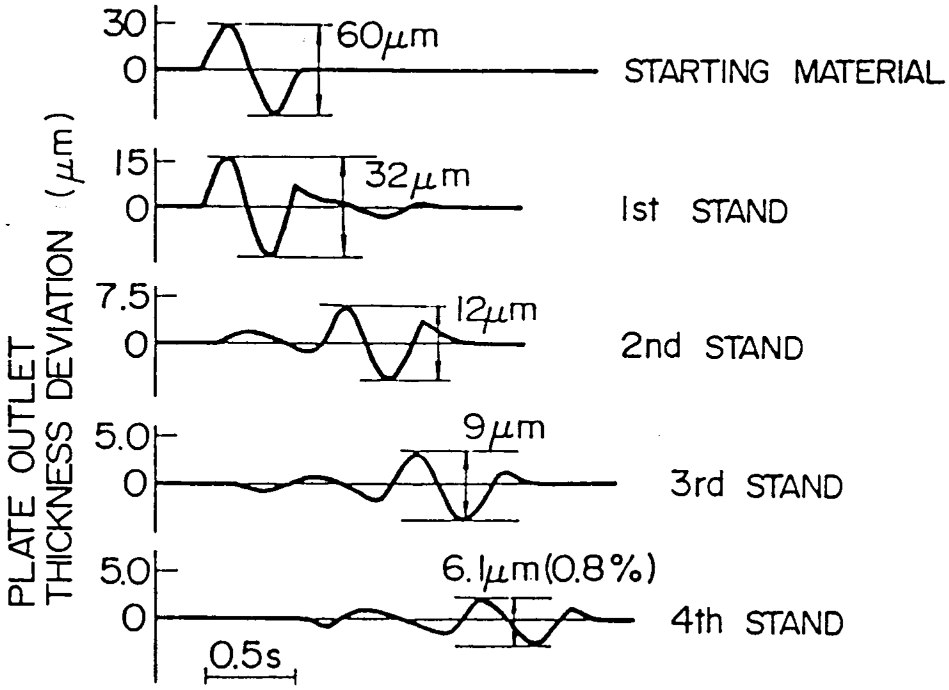


F I G. 7B

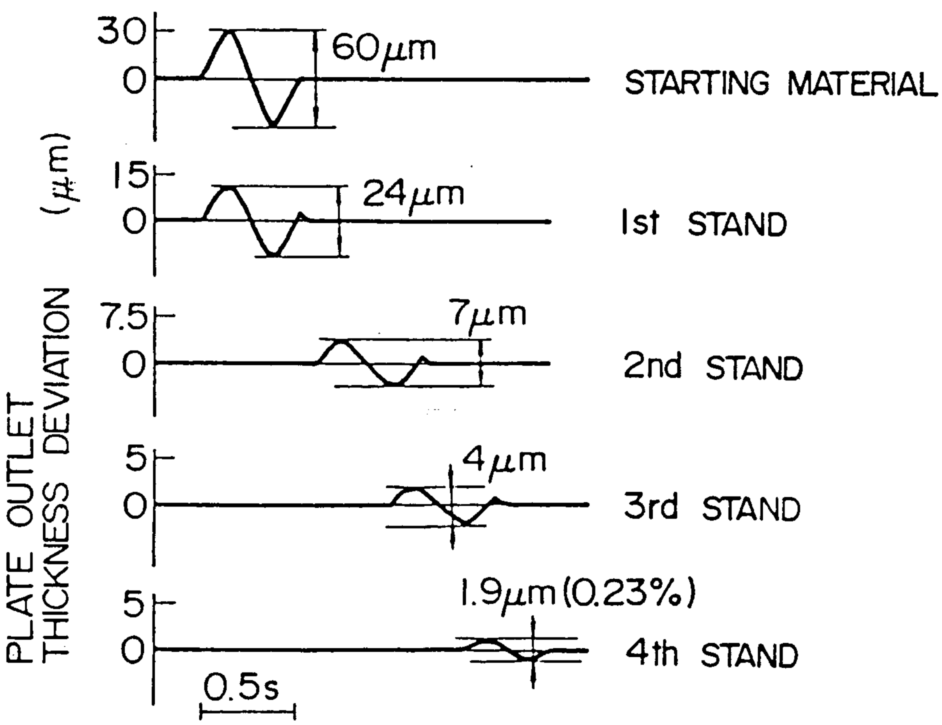

FIG. 8

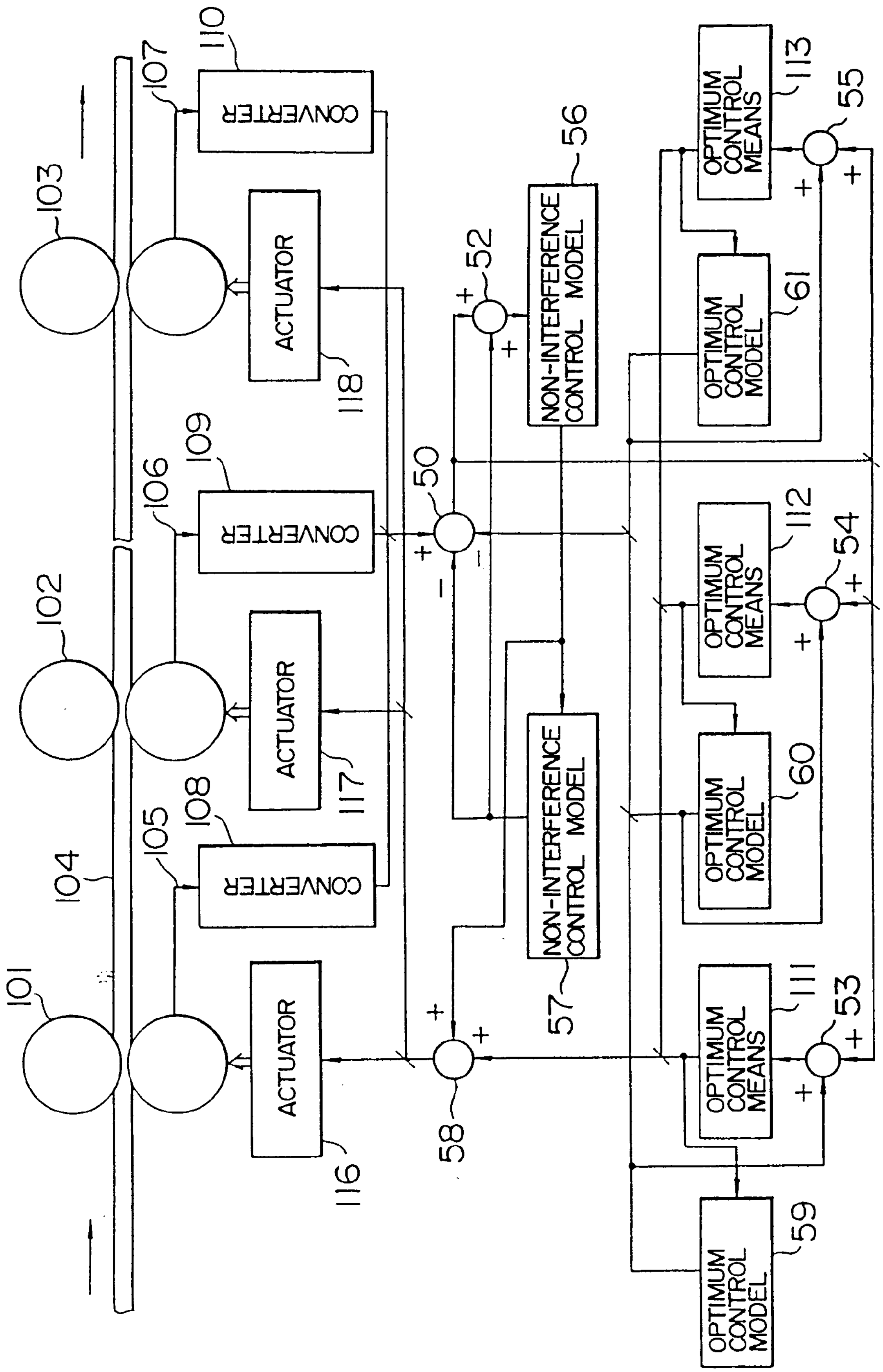

CONVERTER
CONVERTER
CONVERTER
ACTUATOR
ACTUATOR
ACTUATOR
NON-INTERFERENCE CONTROL MODEL
NON-INTERFERENCE CONTROL MODEL
OPTIMUM CONTROL MEANS
OPTIMUM CONTROL MEANS
OPTIMUM CONTROL MEANS
OPTIMUM CONTROL MODEL
OPTIMUM CONTROL MODEL
OPTIMUM CONTROL MODEL
101
102
103
104
105
106
107
108
109
110
111
112
113
116
117
118
50
52
53
54
55
56
57
58
59
60
61

FIG. 9

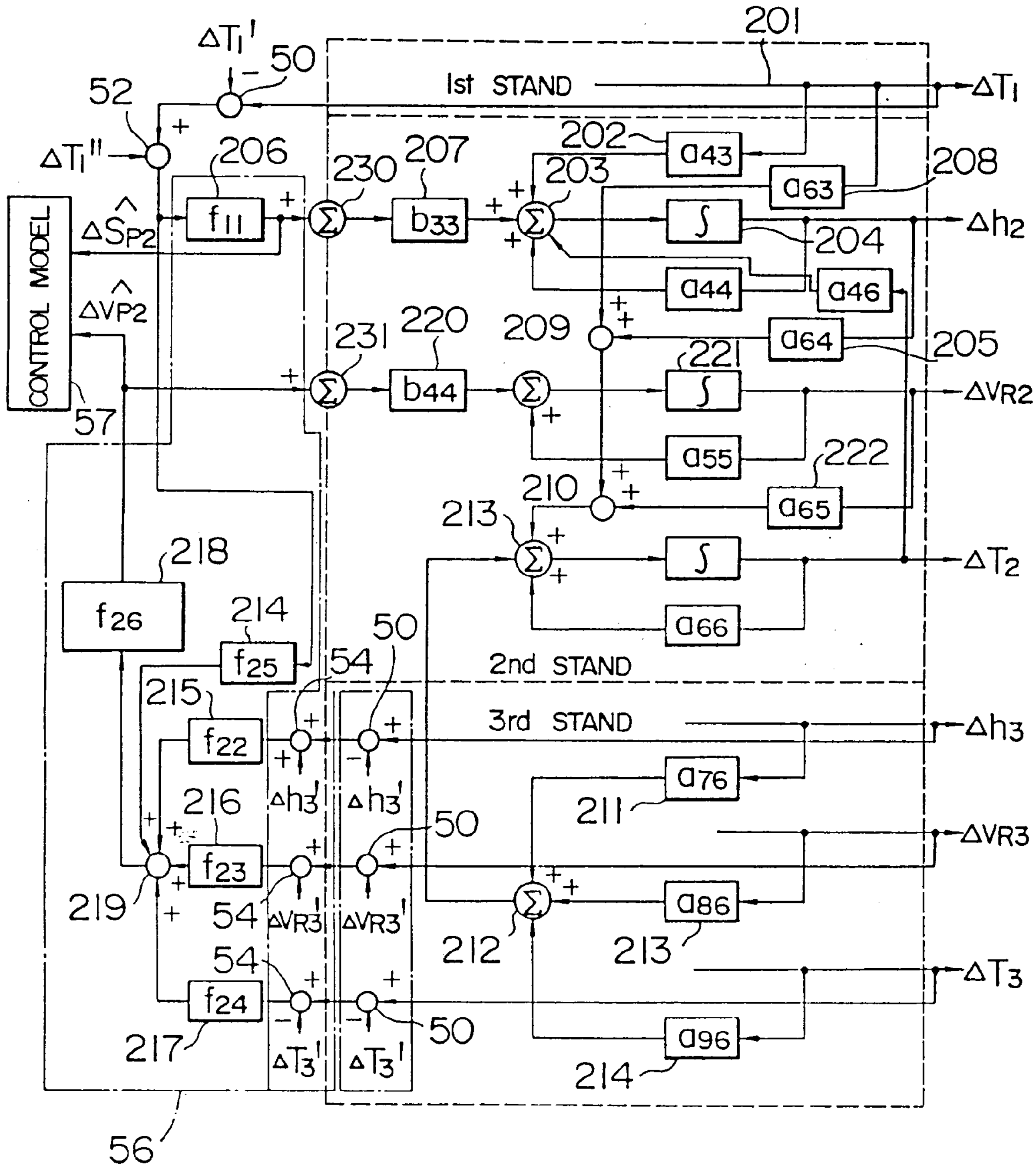

201
1st STAND
2nd STAND
3rd STAND
CONTROL MODEL
ΔT1'
ΔT1''
ΔT1
ΔSP2
ΔVP2
Δh2
ΔVR2
ΔT2
Δh3
ΔVR3
ΔT3
Δh3'
ΔVR3'
ΔT3'
f11
f22
f23
f24
f25
f26
b33
b44
a43
a63
a44
a46
a64
a55
a65
a66
a76
a86
a96
50
52
54
56
57
202
203
204
205
206
207
208
209
210
211
212
213
214
215
216
217
218
219
220
221
222
230
231

FIG. 10

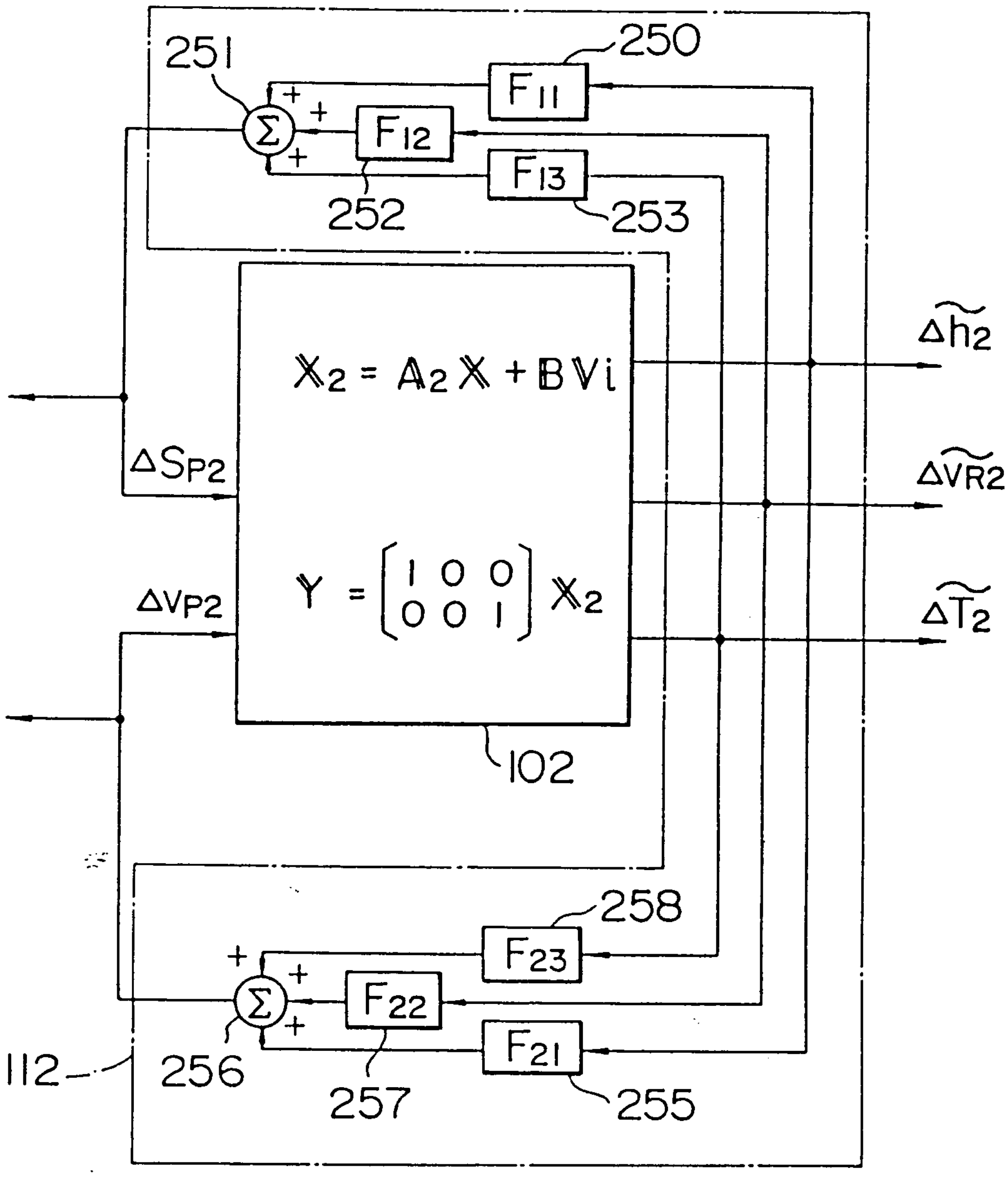
250
251
F11
F12
F13
252
253
$\Delta\widetilde{h_2}$
$\mathbb{X}_2 = \mathbb{A}_2\mathbb{X} + \mathbb{B}\mathbb{V}i$
$\Delta S_{P2}$
$\Delta\widetilde{V_{R2}}$
$\mathbb{Y} = \begin{bmatrix} 1 & 0 & 0 \\ 0 & 0 & 1 \end{bmatrix} \mathbb{X}_2$
$\Delta V_{P2}$
$\Delta\widetilde{T_2}$
102
258
F23
F22
F21
112
256
257
255

FIG. 11

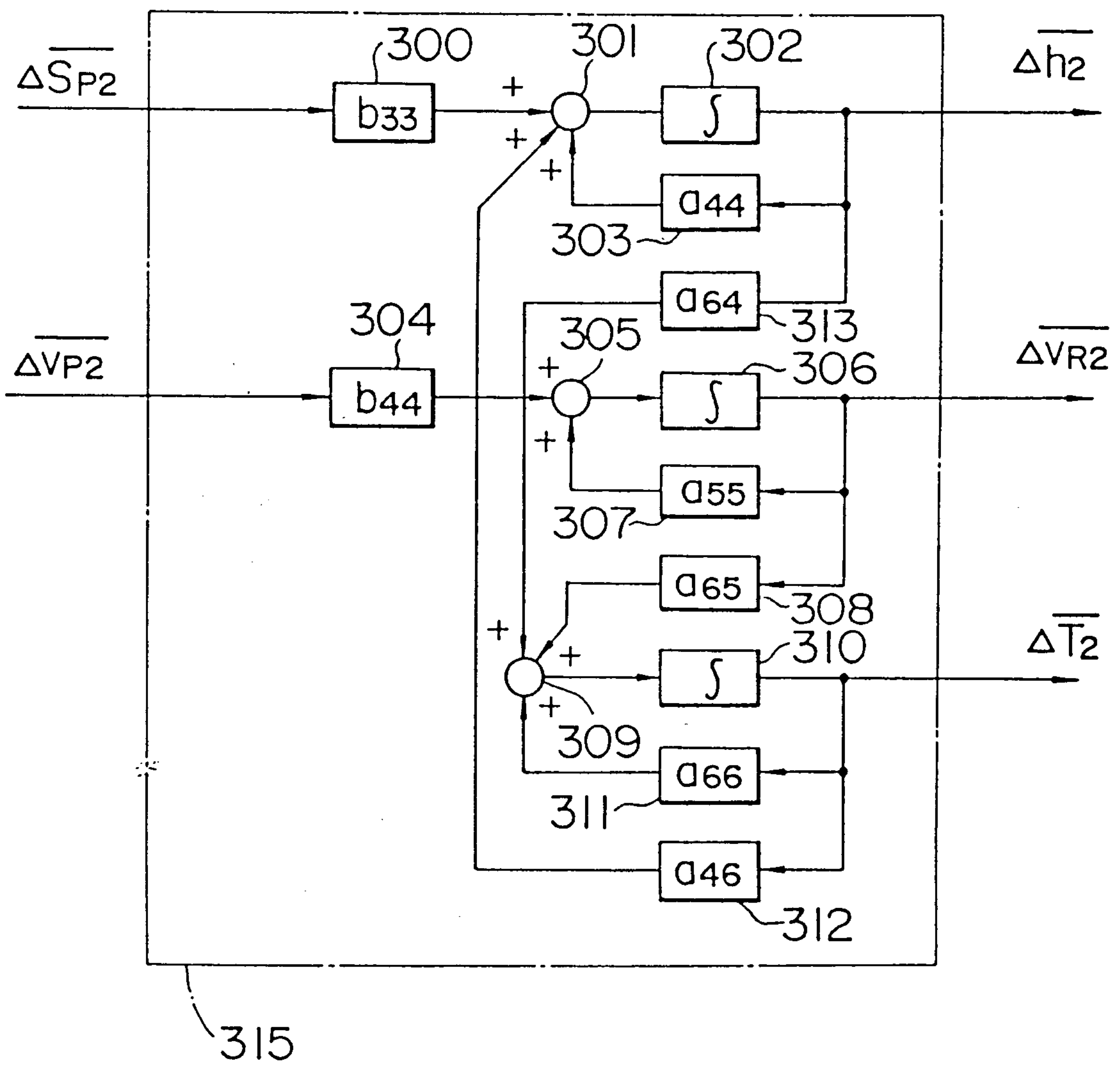

300
301
302
ΔS̄P2
b33
+
+
+
∫
Δh̄2
a44
303
a64
313
304
305
ΔV̄P2
+
b44
∫
306
ΔV̄R2
+
a55
307
a65
308
+
+
∫
310
ΔT̄2
+
309
a66
311
a46
312
315

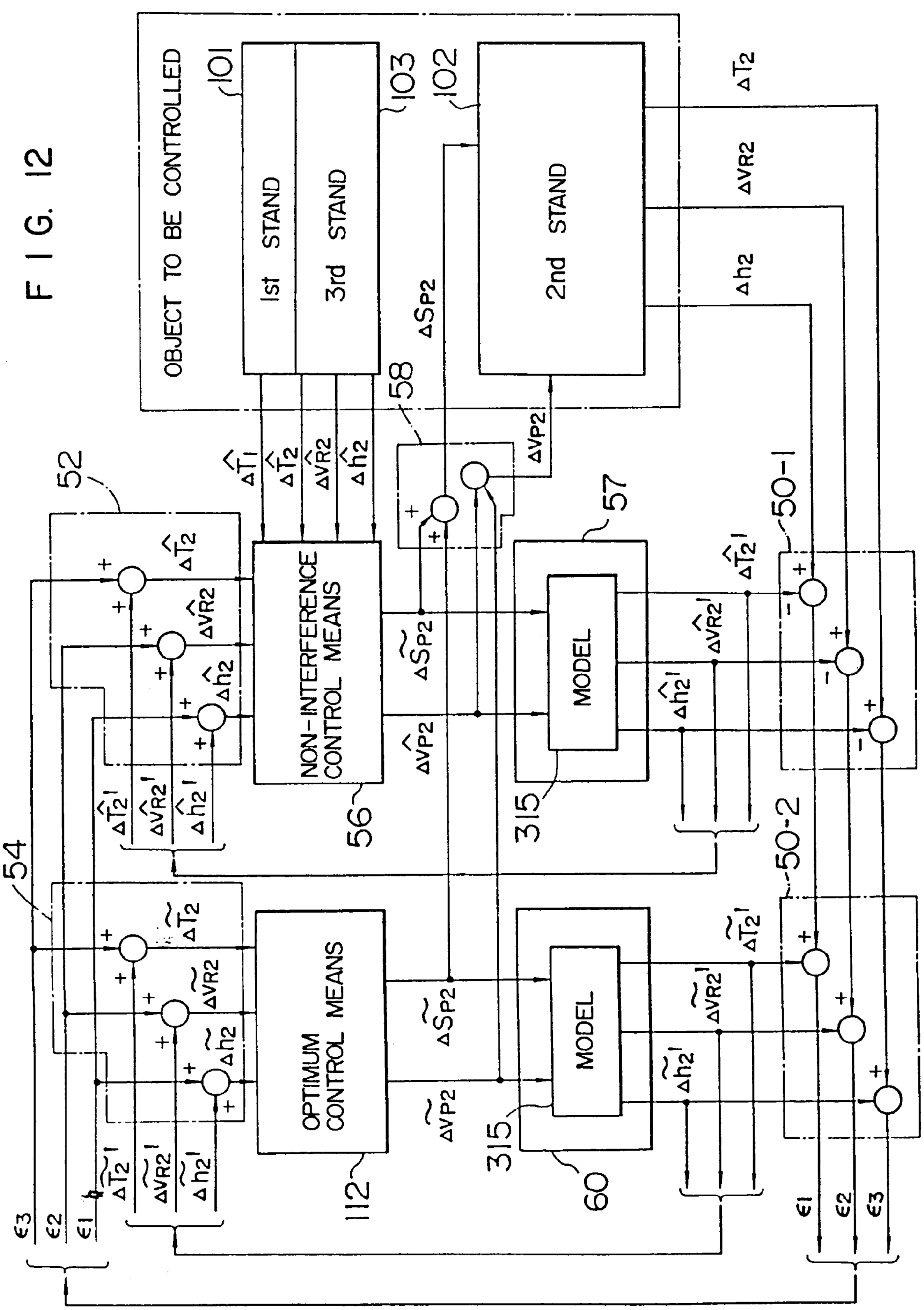
OBJECT TO BE CONTROLLED
1st STAND
3rd STAND
2nd STAND
NON-INTERFERENCE CONTROL MEANS
OPTIMUM CONTROL MEANS
MODEL
MODEL
101
102
103
52
54
56
57
58
60
112
315
315
50-1
50-2

FIG. 12

FIG. 13

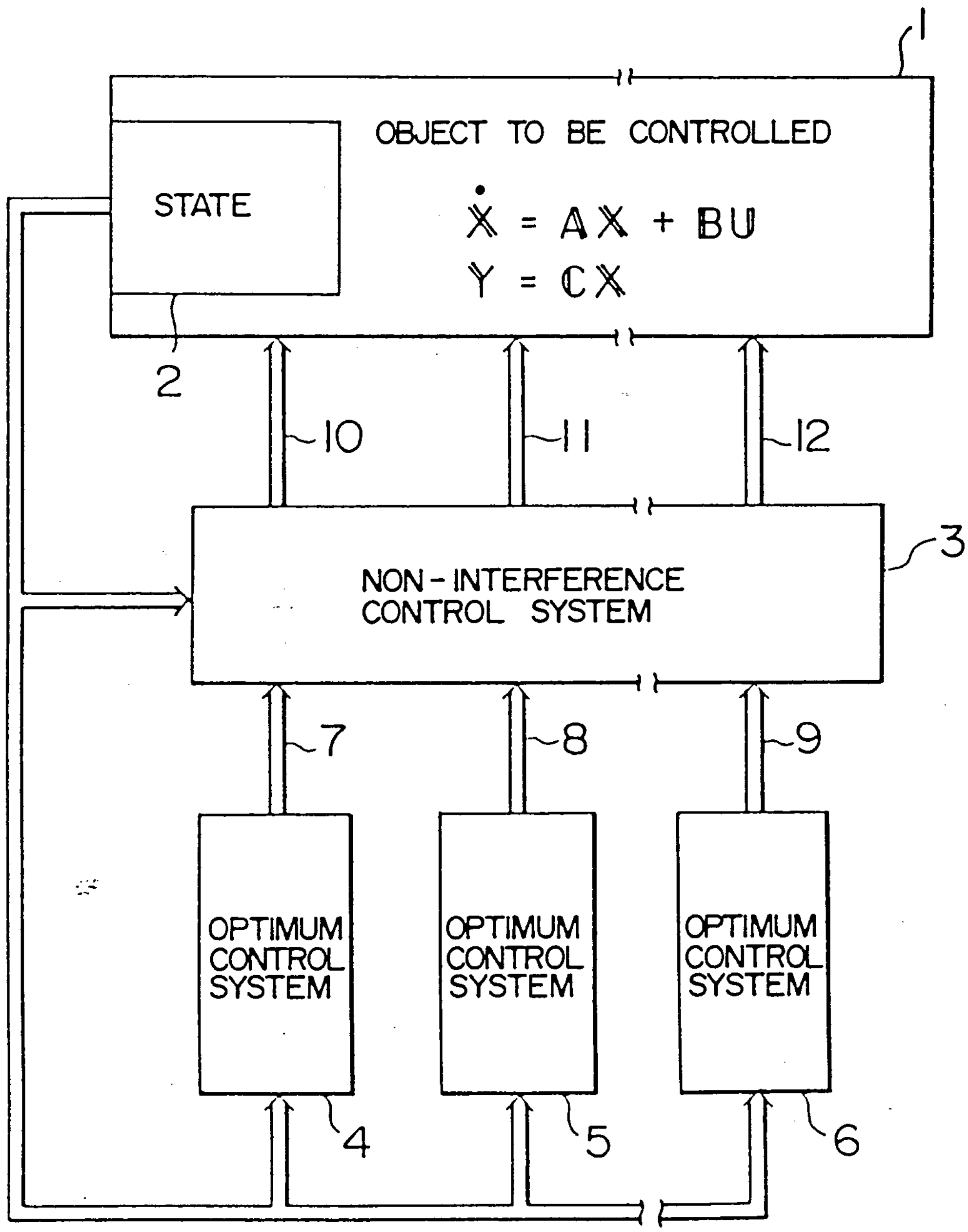
1
OBJECT TO BE CONTROLLED
STATE
$\dot{X} = AX + BU$
$Y = CX$
2
10
11
12
3
NON-INTERFERENCE CONTROL SYSTEM
7
8
9
OPTIMUM CONTROL SYSTEM
OPTIMUM CONTROL SYSTEM
OPTIMUM CONTROL SYSTEM
4
5
6

FIG. 14

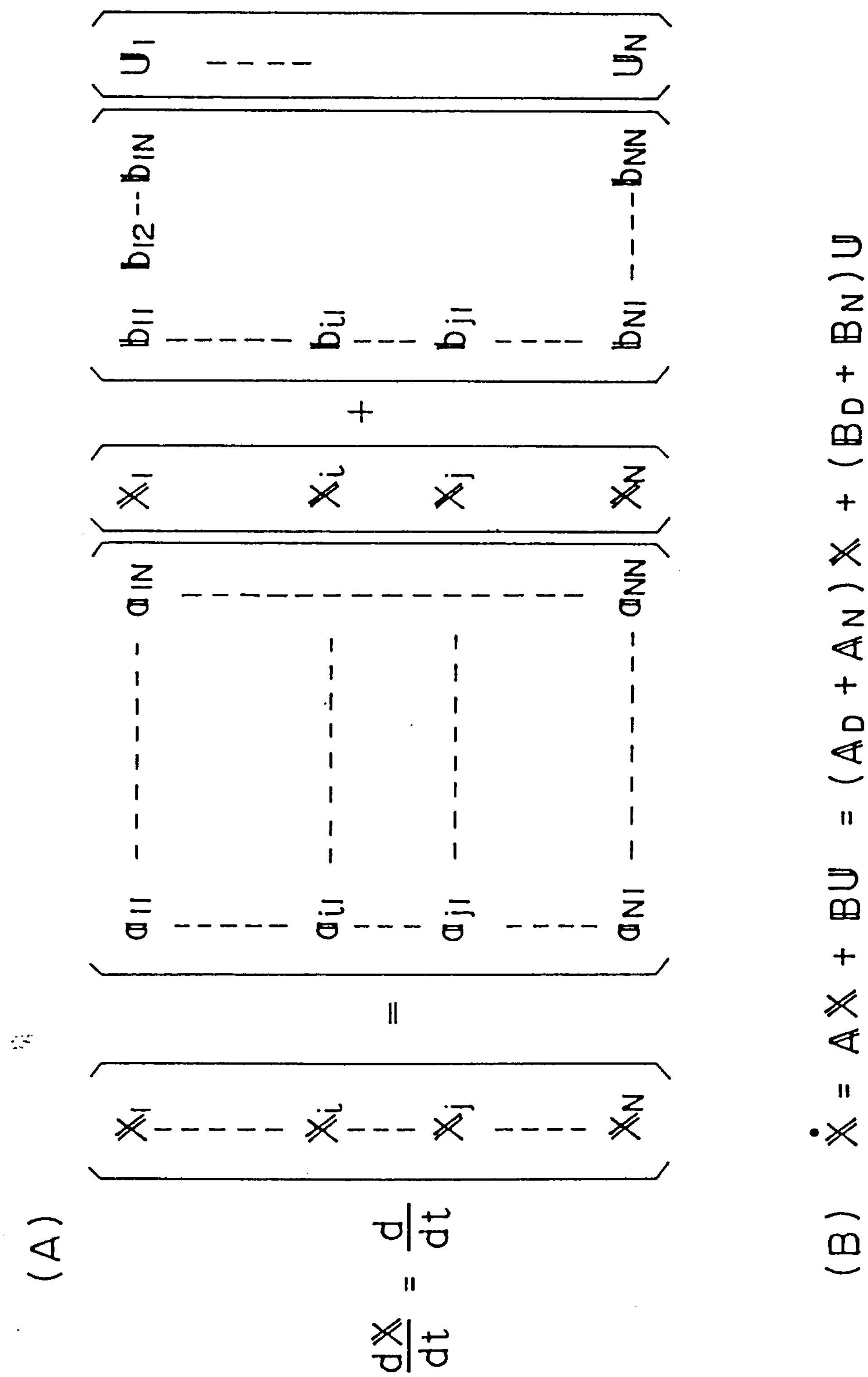

# FIG. 15

$$A_D = \begin{bmatrix} a_{11} & & & \\ & a_{22} & & 0 \\ & & \ddots & \\ 0 & & & a_{NN} \end{bmatrix}$$

$$A_N = \begin{bmatrix} 0 & a_{12} & a_{13} & \cdots & a_{1N} \\ a_{21} & 0 & & & \vdots \\ \vdots & & \ddots & & a_{N-1N} \\ a_{N1} & \cdots & \cdots & a_{NN-1} & 0 \end{bmatrix}$$

$$B_D = \begin{bmatrix} b_{11} & & & & \\ & b_{22} & & & 0 \\ & & \ddots & & \\ & & & b_{ii} & \\ 0 & & & & \ddots \\ & & & & b_{NN} \end{bmatrix}$$

$$B_N = \begin{bmatrix} 0 & b_{12} & \cdots & \cdots & b_{1N} \\ b_{21} & 0 & & & \vdots \\ \vdots & & \ddots & & b_{N-1N} \\ b_{N1} & \cdots & \cdots & b_{NN-1} & 0 \end{bmatrix}$$

F I G. 16

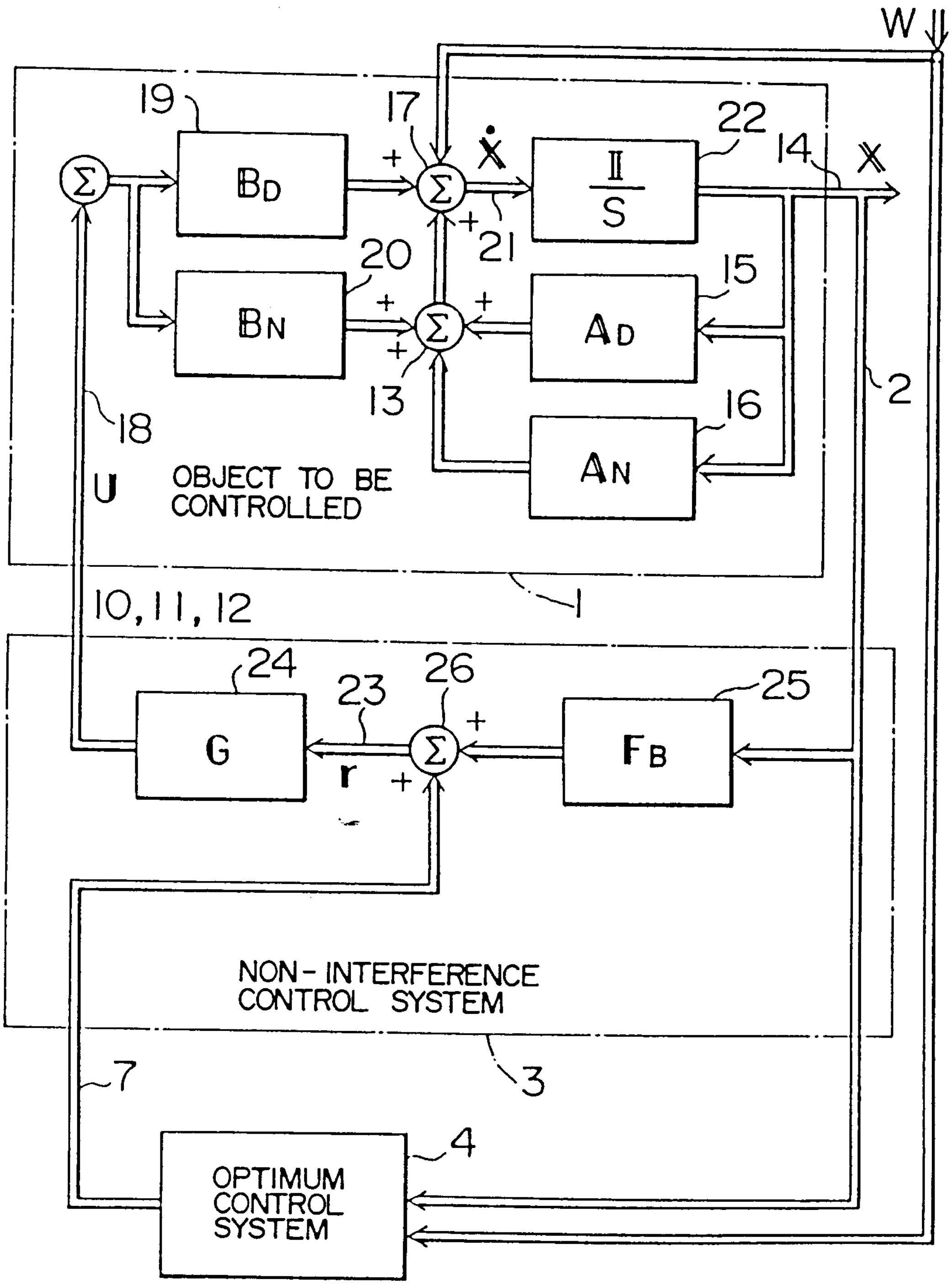
W
19
17
22
14
X
BD
I/S
21
20
15
BN
AD
2
13
16
18
AN
U
OBJECT TO BE CONTROLLED
1
10, 11, 12
24
23
26
25
G
FB
r
NON-INTERFERENCE CONTROL SYSTEM
7
3
4
OPTIMUM CONTROL SYSTEM

FIG. 17

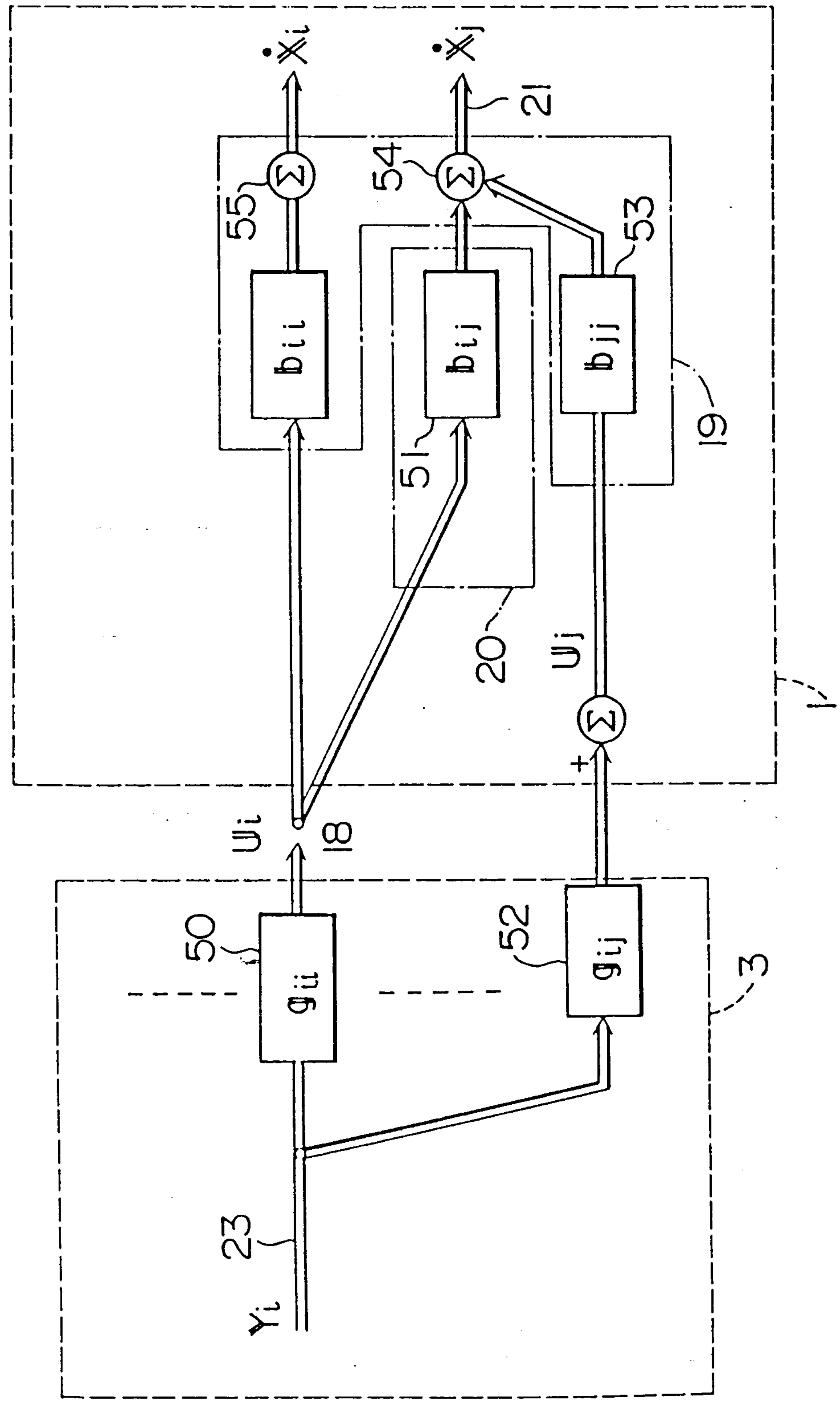

$\dot{X}_i$
$\dot{X}_j$
21
55
54
53
$b_{ii}$
$b_{ij}$
$b_{jj}$
51
19
20
$U_j$
1
$U_i$
18
50
52
$g_{ii}$
$g_{ij}$
3
23
$Y_i$

FIG. 18

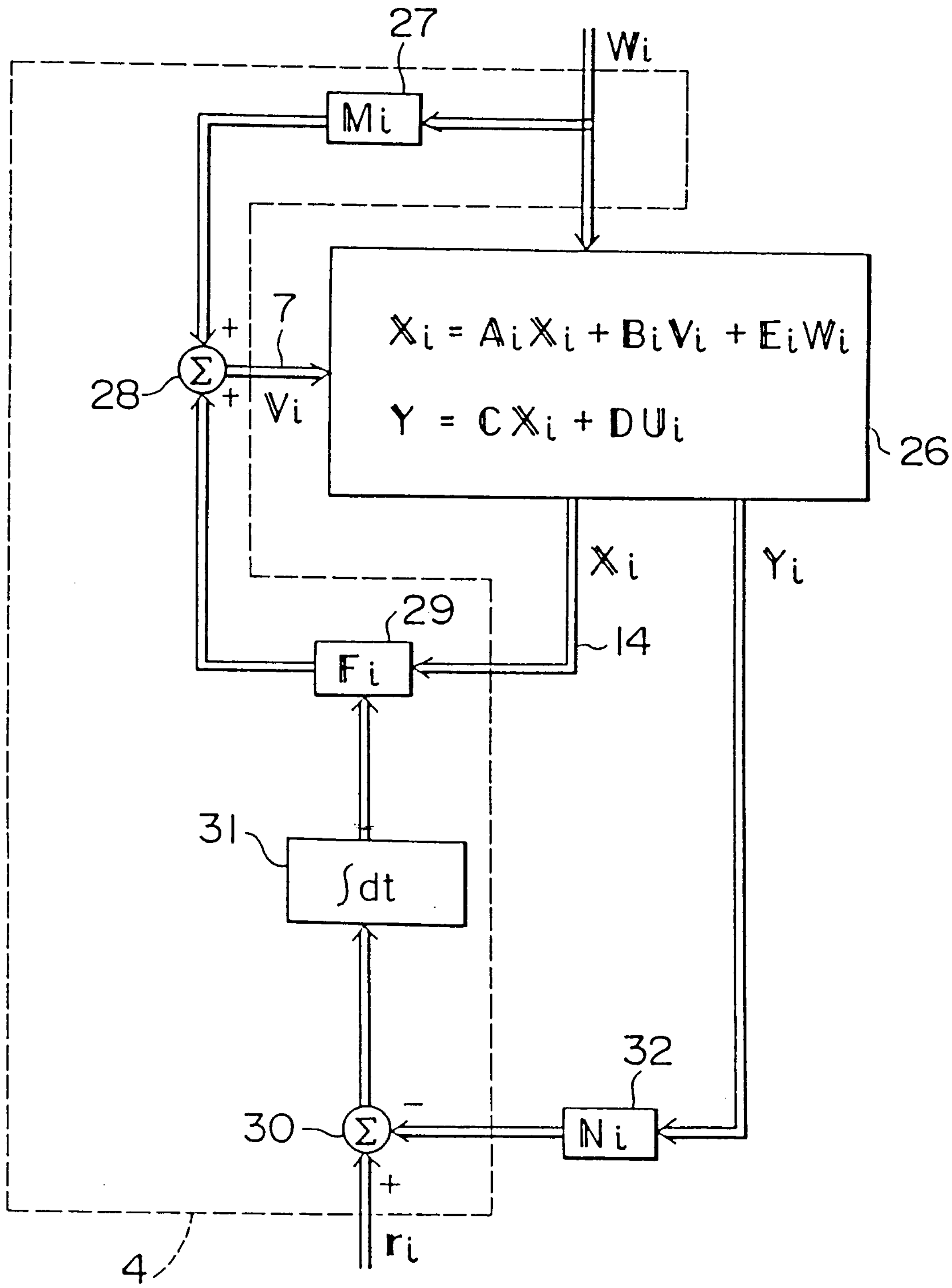
27
Wi
Mi
7
+
28
Σ
+
Vi
Xi = AiXi + BiVi + EiWi
Y = CXi + DUi
26
Xi
Yi
29
Fi
14
31
∫dt
32
30
Σ
−
Ni
+
ri
4

FIG. 19

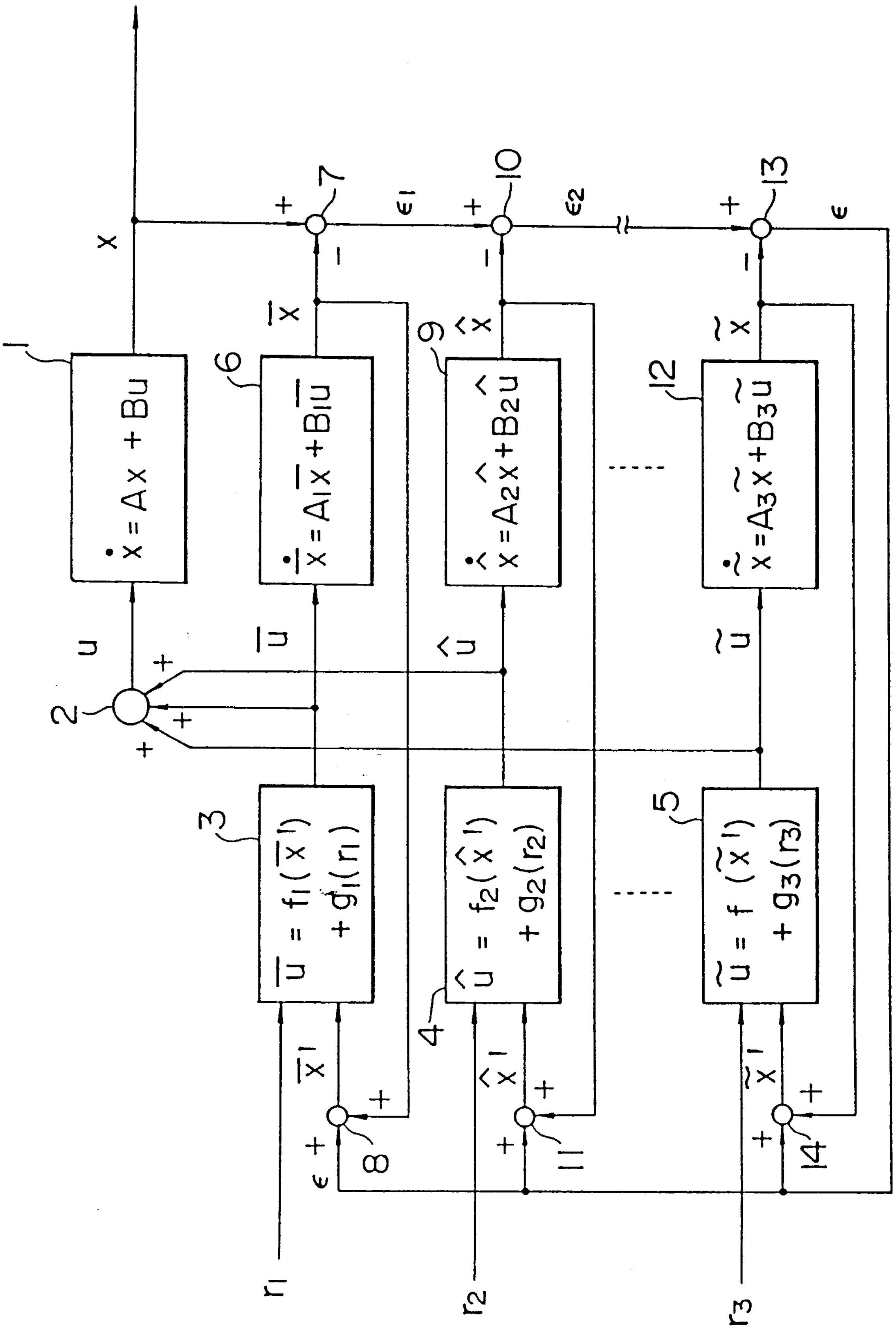

ẋ = Ax + Bu
u = f1(x'¯) + g1(r1)
û = f2(x̂') + g2(r2)
ũ = f (x̃') + g3(r3)
x
u
ε1
ε2
ε
r1
r2
r3
1
2
3
4
5
6
7
8
9
10
11
12
13
14

F I G. 20A

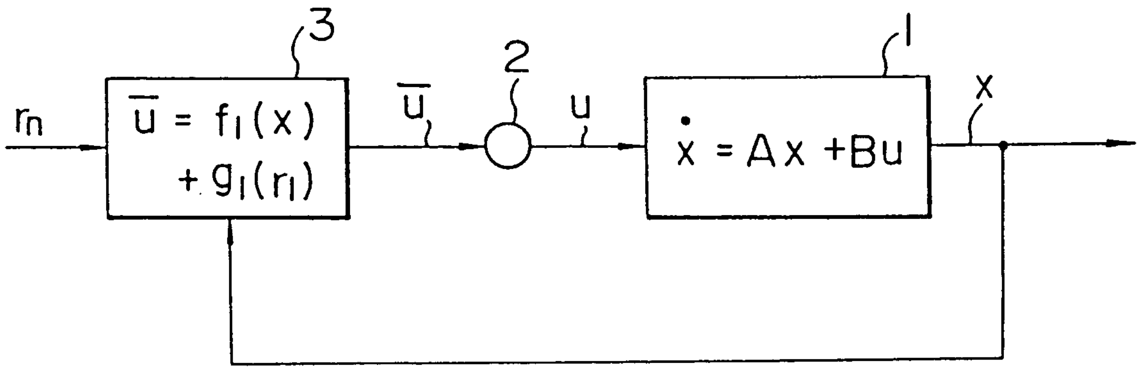


F I G. 20B

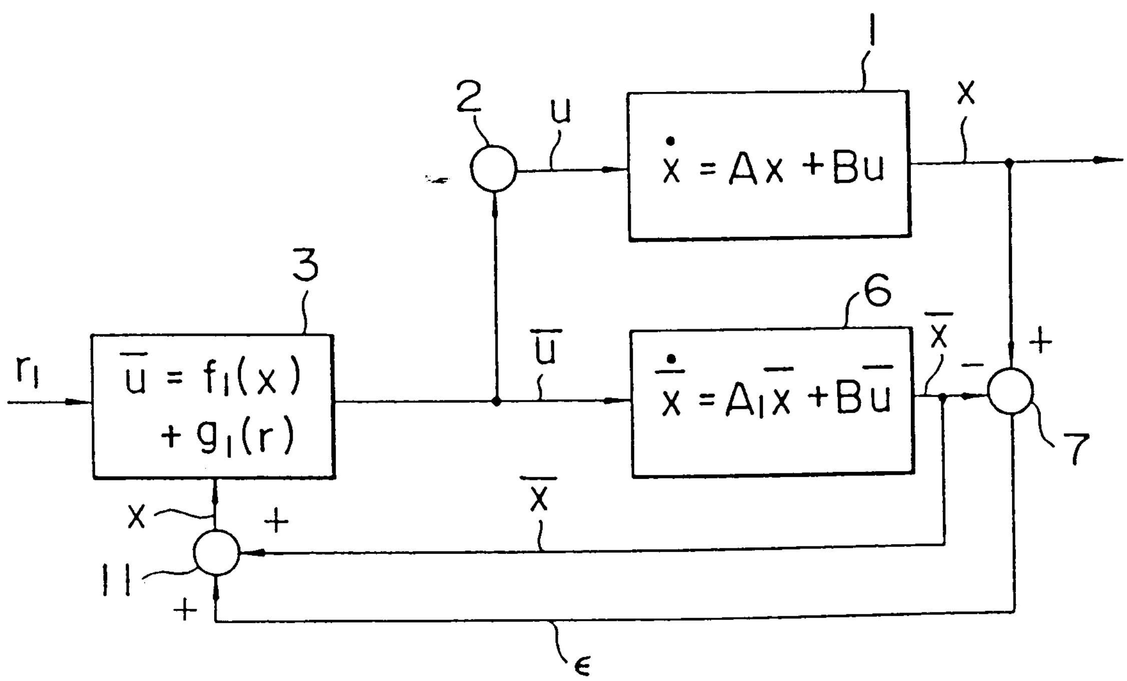

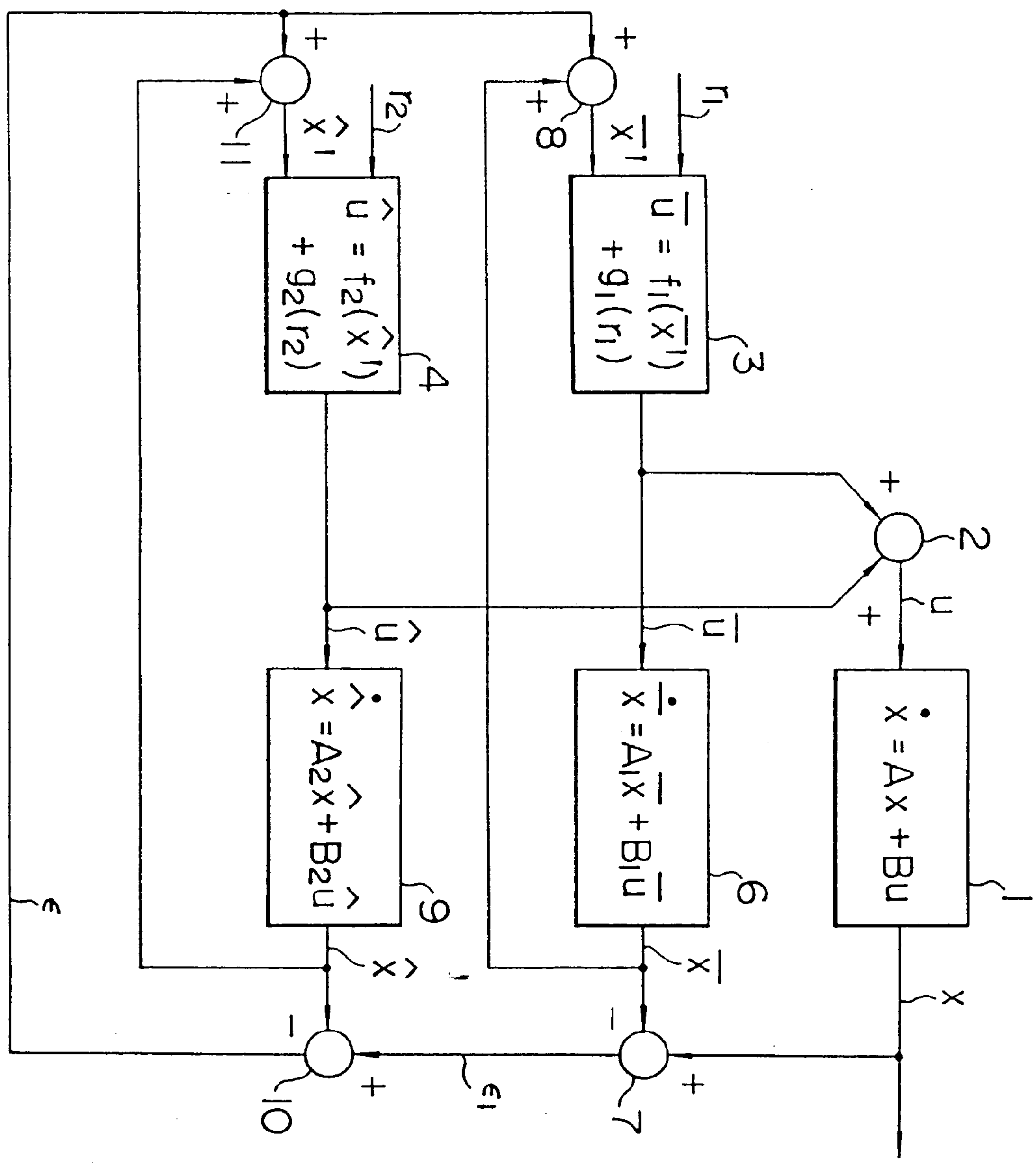

FIG. 21

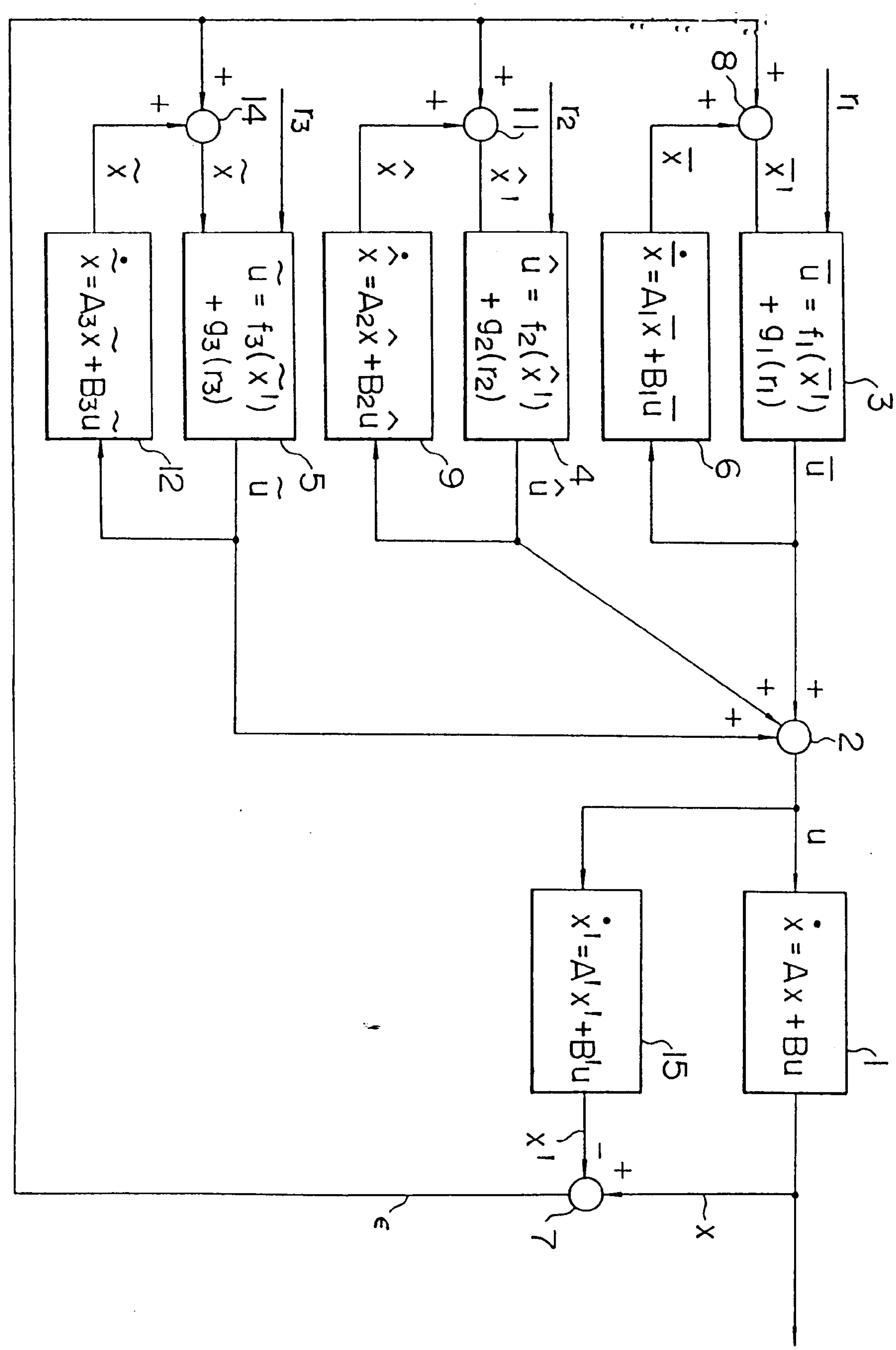

FIG. 22

FIG. 23

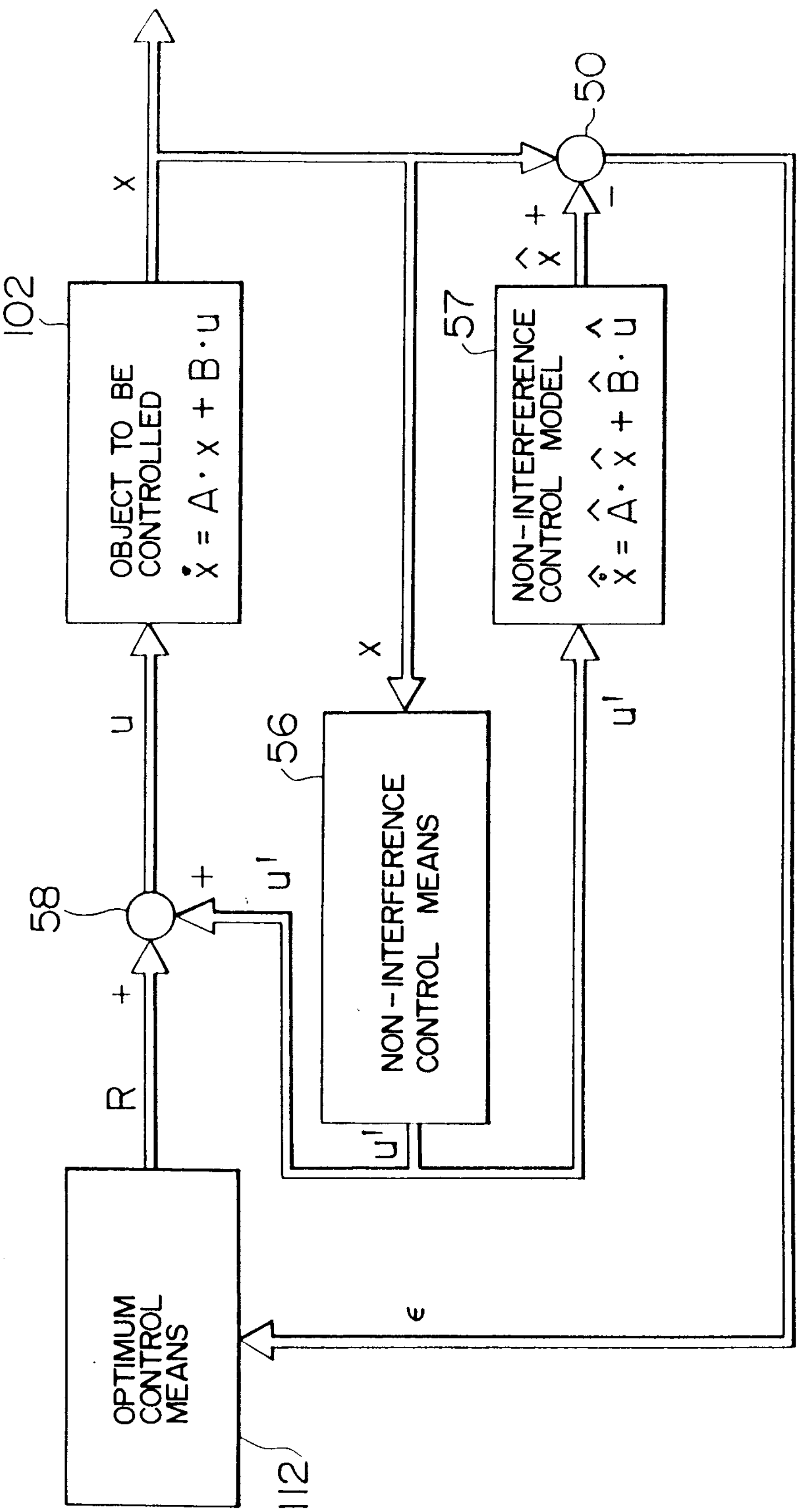
OPTIMUM CONTROL MEANS
112
R
+
58
+
u'
u
NON-INTERFERENCE CONTROL MEANS
56
u'
x
OBJECT TO BE CONTROLLED
$\dot{x} = A \cdot x + B \cdot u$
102
x
NON-INTERFERENCE CONTROL MODEL
$\dot{\hat{x}} = \hat{A} \cdot \hat{x} + \hat{B} \cdot \hat{u}$
57
u'
$\hat{x}$
+
−
50
ε